# EUROPEAN PATENT SPECIFICATION

(11) **EP 4 030 379 B1**
(45) Date of publication and mention of the grant of the patent: **27.05.2026**
(21) Application number: 21789264.5
(22) Date of filing: 24.02.2021
(51) Int. Cl.: G06T 5/60, G06T 5/70, G06N 3/08

(54) **IMAGE PROCESSING METHOD, SMART DEVICE, AND COMPUTER-READABLE STORAGE MEDIUM**
BILDVERARBEITUNGSVERFAHREN, INTELLIGENTE VORRICHTUNG UND COMPUTERLESBARES SPEICHERMEDIUM
PROCÉDÉ DE TRAITEMENT D'IMAGE, DISPOSITIF INTELLIGENT, ET SUPPORT DE STOCKAGE LISIBLE PAR ORDINATEUR

(30) Priority: 15.04.2020 CN 202010295743
(43) Date of publication of application: 20.07.2022
(73) Proprietor: Tencent Technology (Shenzhen) Company Limited, Shenzhen, Guangdong, 518057 (CN)
(72) Inventor: KE, Geyang, Shenzhen, Guangdong 518057 (CN); HUANG, Fei, Shenzhen, Guangdong 518057 (CN); XIONG, Wei, Shenzhen, Guangdong 518057 (CN)
(74) Representative: Novagraaf International SA
(86) International application number: PCT/CN2021/077544
(87) International publication number: WO 2021/208600

(56) References cited:
- CN-A- 108 154 487
- CN-A- 110 287 969
- CN-A- 111 476 737
- US-B2- 8 107 764
- YANG JINGYU ET AL: "Demoir�ing for screen-shot images with multi-channel layer decomposition", 2017 IEEE VISUAL COMMUNICATIONS AND IMAGE PROCESSING (VCIP), IEEE, 10 December 2017 (2017-12-10), pages 1 - 4, XP033325737, DOI: 10.1109/VCIP.2017.8305057
- CHENG XI ET AL: "Multi-Scale Dynamic Feature Encoding Network for Image Demoir�ing", 2019 IEEE/CVF INTERNATIONAL CONFERENCE ON COMPUTER VISION WORKSHOP (ICCVW), IEEE, 27 October 2019 (2019-10-27), pages 3486 - 3493, XP033732814, DOI: 10.1109/ICCVW.2019.00432
- YUJING SUN ET AL: "Moire Photo Restoration Using Multiresolution Convolutional Neural Networks", ARXIV.ORG, CORNELL UNIVERSITY LIBRARY, 201 OLIN LIBRARY CORNELL UNIVERSITY ITHACA, NY 14853, 8 May 2018 (2018-05-08), XP081138916, DOI: 10.1109/TIP.2018.2834737

## Description

### FIELD OF THE TECHNOLOGY

The present disclosure relates to the technical field of image processing, and in particular to an image processing technique.

### BACKGROUND OF THE DISCLOSURE

Image applications, as a very good auxiliary tool, have been applied to various scenarios in people's life, study, and work, with development of computer technology and electronic imaging technology. Devices such as mobile phones and cameras are capable to capture not only environmental images, but also images that are displayed on various display screens. The obtained image often has moiré patterns when being captured by mobile phones, digital cameras, and the like from an electronic display screen. The moiré patterns not only affect viewing experience, but also hinder subsequent image recognition. Moreover, the moiré patterns add textures and noise into original image content, which increases a data volume of compressed image.

In conventional solutions for removing moiré patterns, a part containing the moiré patterns is determined from an image through an edge extraction algorithm based on a common shape of the moiré patterns and a shape difference between the moiré patterns and other content in the image, such that the moiré patterns can be removed. Such algorithm is complex in practice, and has a poor effect when removing the moiré patterns. Document Demoiréingfor screen-shot images with multichannel layer decomposition (2017 IEEE VISUAL COMMUNICATIONSAND IMAGE PROCESSING (VCIP), IEEE, 10 December 2017, pages 1-4) by YANG Jingyu et al, proposes a scheme in which two associated Laplacian pyramids sharing the same Laplacian coefficients are used to reconstruct images during the demoiréing process. Documents Multi-Scale Dynamic Feature Encoding Network for Image Demoiréing (2019 IEEE/CVF INTERNATIONAL CONFERENCE ON COMPUTER VISION WORKSHOP (ICCVW), IEEE, 27 October 2019, pages 3486-3493) by CHENG Xi, et al and Moire Photo Restoration Using Multiresolution Convolutional Neural Networks (ARXIV.ORG, CORNELL UNIVERSITY LIBRARY, 201 OLIN LIBRARY CORNELL UNIVERSITY ITHACA, NY 14853, 8 May 2018) by SUN Yujing, et al provides a scheme using multiple layers of convolutional network to extract features from the to-be-demoiréd images.

### SUMMARY

The invention is defined by the appended claims. Roughly speaking, a computer-implemented method for image processing, a smart device, and a computer-readable storage medium are provided according to embodiments of the present disclosure, which provides a convenient and comprehensive manner for removing the moiré patterns from an image.

For ease of understanding the basis of the invention as claimed, a method for image processing is provided. The method is executable on a smart device, and includes:
obtaining an original image; and
removing moiré patterns from the original image through an image processing model to obtain a target image;0
where the image processing model is a network model pre-trained according to a training set of moiré pattern data; and
where the image processing model includes a multi-band module configured to process the original image to obtain an N-layer Laplacian pyramid related to the original image, and obtain a first processing-result feature map based on feature maps corresponding to N spatial frequency bands of the N-layer Laplacian pyramid; the target image is obtained based on the first processing-result feature map; and N is a positive integer greater than or equal to 2.

In another aspect, an apparatus for apparatus for image processing, including:
an obtaining module, configured to obtain an original image; and
a processing module, configured to remove moiré patterns from the original image through an image processing model to obtain a target image,
where the image processing model is a network model pre-trained according to a training set of moiré pattern data; and
where the image processing model includes a multi-band module configured to process the original image to obtain an N-layer Laplacian pyramid related to the original image, and obtain a first processing-result feature map based on feature maps corresponding to N spatial frequency bands of the N-layer Laplacian pyramid; the target image is obtained based on the first processing-result feature map; and N is a positive integer greater than or equal to 2.

Correspondingly, a smart device is further provided according embodiments of the present disclosure. The smart device includes a storage apparatus and a processor, where the storage apparatus stores program instructions for image processing, and the processor is configured to invoke the program instructions to implement the foregoing method for image processing.

Correspondingly, a computer-readable storage medium is further provided according to embodiments of the present disclosure. The computer-readable storage medium stores program instructions for image processing, and the program instructions when executed by a processor implements the foregoing method for image processing.

Correspondingly, a computer program product is further provided according to embodiments of the present disclosure. The computer program product includes instructions, where the instructions when executed on a computer configure the computer to perform the foregoing method for image processing.

A difference exhibited by moiré patterns in different scales and different spatial frequency bands is considered according to embodiments of the present disclosure. A multi-scale model constructed based on the Laplacian pyramid is designed in the image processing model for removing moiré patterns. The feature maps of multiple frequency bands of the Laplacian pyramid are applied to train the image processing model capable to remove moiré patterns throughout different scales and different frequency bands. Thereby, removal of the moiré patterns is implemented with convenience and a better effect.

### BRIEF DESCRIPTION OF THE DRAWINGS

For clearer illustration of the technical solutions according to embodiments of the present disclosure or conventional techniques, hereinafter briefly described are the drawings to be applied in embodiments of the present disclosure or conventional techniques. The drawings in the following descriptions are only some embodiments of the present disclosure, and other drawings may be obtained by those skilled in the art based on the provided drawings without creative efforts.
Figure 1 is a schematic flowchart of utilizing a function of moiré pattern removal according to an embodiment of the present disclosure.
Figure 2 shows an application interface related to one of image processing applications according to an embodiment of the present disclosure.
Figure 3 is another schematic flowchart of utilizing a function of moiré pattern removal according to an embodiment of the present disclosure.
Figure 4 is a schematic diagram of moiré patterns in different scales according to an embodiment of the present disclosure.
Figure 5 is a schematic diagram of moiré patterns in different spatial frequency bands according to an embodiment of the present disclosure.
Figure 6 is a schematic flowchart of a method for image processing according to an embodiment of the present disclosure.
Figure 7 is a schematic structural diagram of an image processing model according to an embodiment of the present disclosure.
Figure 8 is a schematic flowchart of another method for image processing according to an embodiment of the present disclosure.
Figure 9 is a schematic structural diagram of another image processing model according to an embodiment of the present disclosure.
Figure 10 is a schematic flowchart of training an image processing model according to an embodiment of the present disclosure.
Figure 11 is a schematic structural diagram of training an image processing model according to an embodiment of the present disclosure.
Figure 12 is a schematic structural diagram of an apparatus for image processing according to an embodiment of the present disclosure.
Figure 13 is a schematic structural diagram of a smart device according to an embodiment of the present disclosure.

### DESCRIPTION OF EMBODIMENTS

Hereinafter technical solutions in embodiments of the present disclosure are described clearly and completely in conjunction with the drawings in embodiments of the present disclosure, while the invention itself is defined by the appended claims.

Moiré patterns are fence-like texture generated due to an interference phenomenon. Moiré patterns would appear in a captured image, when a spatial frequency of pixels of a photosensitive element, for example, a charge coupled device (CCD) sensor or a complementary metal oxide semiconductor (CMOS) sensor, of a smart device having a photographing function, for example, a digital camera or a mobile phone, is close to a spatial frequency of stripes in an image displayed on an electronic display.

In embodiments of the present disclosure, characteristics of moiré patterns are comprehensively analyzed. Since the moiré patterns has characteristics of, for example, being differently exhibited under different spatial frequency bands and different scales, an image processing model is correspondingly designed, and a series of deep learning techniques are used. Thereby, the moiré patterns are eliminated in an image captured by the smart devices, such as a smartphone or a digital camera, which photograph an electronic display, and quality of the image is restored as much as possible.

Specifically, an image having moiré patterns is inputted into an image processing model that is trained and optimized, and the image processing model performs processing for removing the moiré patterns to output a target image on requirement. Techniques such as spatial frequency band supervision and multi-task learning are applied to model design, and an attention mechanism is used to restore color and brightness distribution. Thereby, the moiré patterns are removed with a good effect.

Further, practical manners for generating training data are provided according to embodiments of the present disclosure, such that the model training is facilitated based on the generated training data. The training adopts optimization manners, such as self-supervised learning, multi-scale learning, and generative adversarial networks.

In order to implement the foregoing functions, a target application may be designed and installed in a smart device. In one aspect, the target application may call a camera of the smart device to capture images. In another aspect, the target application may read images that are locally stored, or download images from the network. The captured, read, or downloaded image having moiré patterns may be directly displayed to a user. Afterwards, processing for removing moiré patterns may be activated according to an operation of the user, and then the image after the removal is displayed. It is appreciated that automatic processing for removing moiré patterns may alternatively be performed in the background before the image having moiré patterns is displayed to the user, such that a processed target image without moiré patterns is displayed to the user.

There are various application scenarios of removing moiré patterns. An exemplary scenario is related to communication between users. When user A shares information, such as a PPT document on a personal computer, with user B through a communication application, user A may photograph the personal computer screen via a smart device, such as a smartphone, which runs the communication application. In such case, an image having moiré patterns is obtained. User A may directly activate a function of moiré pattern removal on such image. Hence, images of the PPT document, which are shared by user A with user B and obtained by the smartphone photographing the display screen of the personal computer, are all images after removal of moiré patterns. In such case, a data amount, which is due to the moiré patterns, in video coding can be reduced, quality of image can be ensured in data transmission, and it is convenient for user B to view information in the captured image more clearly. Further, user B may store immediately the clear image transmitted via video communication, or convert such image into, for example, an editable document.

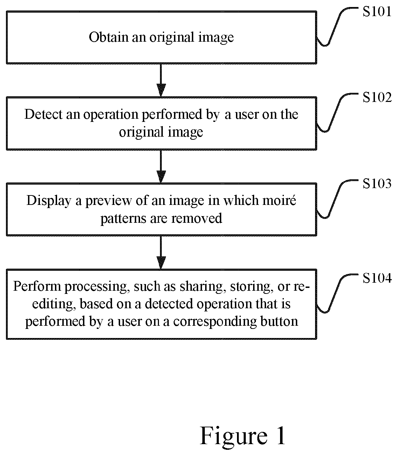

Reference is made to Figure 1, which is a schematic flowchart of utilizing a function of moiré pattern removal according to an embodiment of the present disclosure. A process includes following steps S101 to S104.

In step S101, a smart device obtains an original image.

A user may control the smart device to obtain an image having moiré patterns. For example, the user may photograph an electronic display screen directly to obtain the image having moiré patterns, and such may be called an original image.

In some embodiments, the smart device may alternatively read a local image having moiré patterns, or download an image having moiré patterns from a network, in order to obtain the original image.

In step S102, the smart device detects an operation performed by a user on the original image.

After obtaining the original image having moiré patterns, the smart device may display a button for activating or deactivating moiré pattern removal on an interface for displaying the original image, so as to detect the user operation on the original image. Such button may be, alternatively or additionally, displayed along with the image having moiré patterns on the interface. That is, a "one-click" function of moiré pattern removal can be provided for the original images obtained in different manners.

In step S103, the smart device displays a preview of an image in which moiré patterns are removed.

After completing image processing for removing the moiré patterns, the smart device may display a preview of the image in which the moiré patterns are removed. The image in which the moiré patterns are removed is called a target image. Another functional button configured to, for example, share, save, or re-edit the target image, may be displayed on an interface displaying the preview of the target image.

In step S104, the smart device performs processing, such as sharing, storing, or re-editing, based on a detected operation that is performed by a user on a corresponding button.

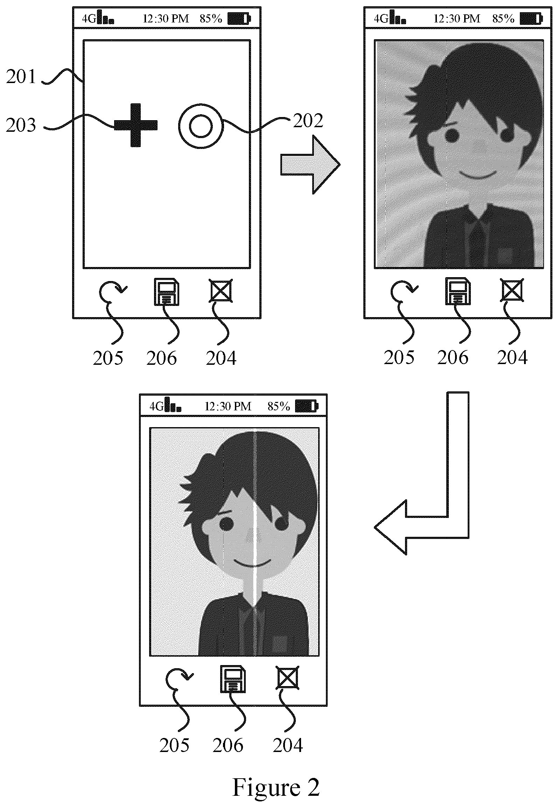

Figure 2 shows an application interface related to one of image processing applications in an embodiment of the present disclosure. An image process application displays a series of interfaces, of which schematic diagrams are illustrated, from a user obtaining an image having moiré patterns to the image in which the moiré patterns are removed being displayed to the user. The image processing application is activated after the user clicks or taps an icon of the application. The user may trigger, in an interface 201 of the application, an operation for obtaining the original image. Specifically, the user may choose to trigger a photographing button 202 to capture an image, or trigger a loading button 203 to fetch an image locally or via the network. Thereby, the original image is obtained.

The obtained original image may be displayed on the interface 201 of the application. In a case that there are moiré patterns, a removal button 204 may be displayed. After the user clicks or taps the removal button 204, a target application may perform image processing to obtain a target image in which the moiré patterns are removed, and display the target image on the interface 201.

In an embodiment, the smart device may analyze the obtained image, which is displayed on the interface of the application, through the image processing application. The smart device may display the removal button 204 only when determining, through the analysis, that there are moiré patterns in the image. It is appreciated that as an alternative, the removal button 204 may be displayed on the application interface 201 continuously after the original image is obtained. Figure 2 also illustrates other buttons, such as a button 205 that triggers re-obtaining an image and a button 206 that triggers storing an image.

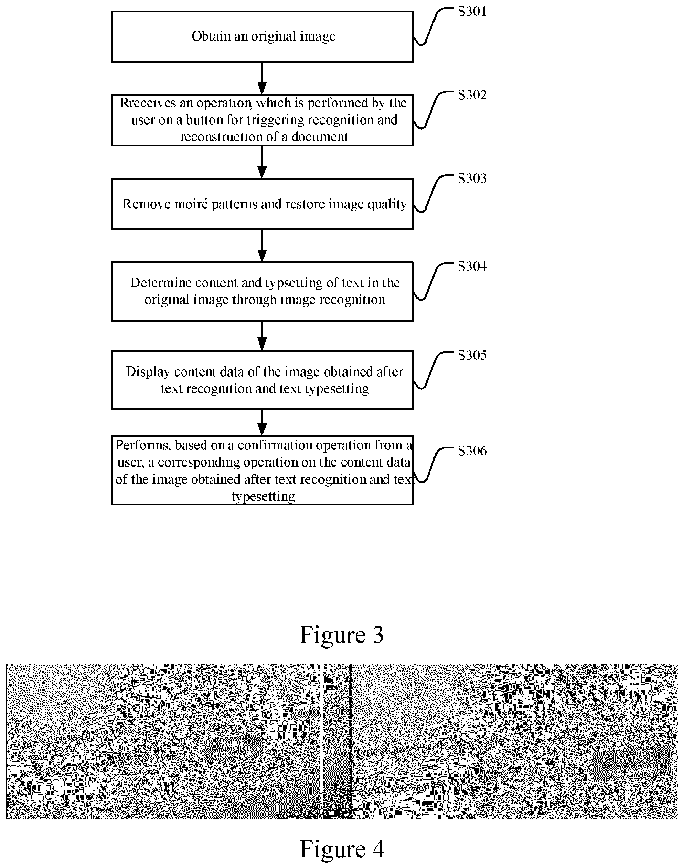

In an embodiment, the method for image processing may be further used to remove moiré patterns in a scenario of converting an image into an editable document. Figure 3 is another schematic flowchart of utilizing a function of moiré pattern removal function according to an embodiment of the present disclosure. A process may include following steps S301 to S306.

In step S301, a smart device obtains an original image.

An image-to-text conversion application that has a function of moiré pattern removal is deployed in the smart device. The image-to-text conversion application refers to an application that converts an image (for example, an image captured by photographing a slideshow) into an editable document. The smart device may activate the image-to-text conversion application in response to a user clicking or tapping an icon of the image-to-text conversion application. Then, the smart device may obtain the original image according to an operation of the user. For example, the smart device may photograph a PPT document displayed on a computer screen to obtain the original image, or fetch the original image having moiré patterns locally.

In step S302, the smart device receives an operation, which is performed by the user on a button for triggering recognition and reconstruction of a document.

In step S303, the smart device performs the method for image processing according to embodiments of the present disclosure to remove moiré patterns and restore image quality.

In step S304, the smart device determines content and typsetting of text in the original image through image recognition.

In an embodiment, the smart device may determine the content and the typsetting of the text in the original image through optical character recognition (OCR).

In step S305, the smart device displays content data of the image obtained after text recognition and text typesetting, and detects whether a confirmation operation is received from the user.

In step S306, in a case that the confirmation operation is received, the smart device performs, based on the confirmation operation, a corresponding operation on the content data of the image obtained after text recognition and text typesetting.

In an embodiment, the smart device may import the content data into a shared document, or store the content data into a local memory as a document, based on the confirmation operation of the user. In some other embodiments, the smart device may further receive an editing operation performed by the user, so as to edit the displayed content data of the image obtained after text recognition and text typesetting. The editing is, for example, adding or modifying a character that is not correctly recognized, or adding a picture that is not correctly recognized.

Hereinafter a method for image processing, which removes moiré patterns, is described according to embodiments of the present disclosure.

A research on images having moiré patterns reveals that moiré patterns have multi-scale and multi-spatial-frequency-band characteristics. In one aspect, moiré patterns have different shapes of in a same image under different scales. For example, moiré patterns of different shapes are exhibited in the same image under different scales, such as 256x256, 384x384, and 512x512. Figure 4 shows an enlarged part of a same image under different scales, in which the shapes of the moiré patterns are different. Data distribution of the moiré patterns is unique in each scale, and hence an image processing model for removing moiré patterns should be capable of dealing with moiré patterns of various shapes under multiple scales. In Figure 4, a resolution of the right image is larger than that of the left image. In simple terms, the moiré patterns change after the left image is further enlarged. A box having text "send message" is taken as an example. In the left image, there are scattered stripes below the box and dense stripes above the box. In the right image, there are dense stripes below the box and scattered stripes above the box. The stripes have different widths between the left image and the right image.

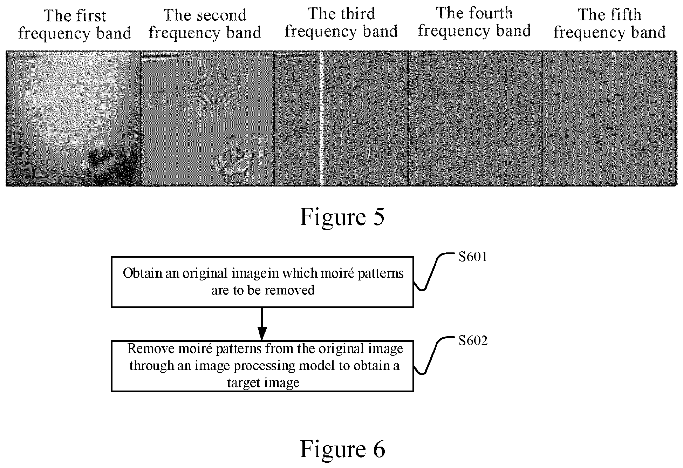

In another aspect, the moiré patterns have different shapes in different spatial frequency bands of a same image. When the moiré patterns are decomposed into multiple spatial frequency bands through the Laplacian pyramid, it is revealed that the moiré patterns in each spatial frequency band have different shapes. As shown in Figure 5, the moiré patterns have different shapes in five spatial frequency bands corresponding to the Laplacian pyramid. Specifically, not every spatial frequency band has a trace of the moiré patterns. As can be seen from Figure 5, data distribution of moiré patterns is different changes from one spatial frequency band to another. In lower frequency bands, the moiré patterns tend to show thick white stripes. In higher frequency bands, the moiré patterns tend to show thin gray lines. According to embodiments of the disclosure, such difference among multiple spatial frequency bands can be utilized for designing an image processing model, and hence moiré patterns can be removed with respect to each spatial frequency band.

It can be appreciated that the foregoing Figure 4 and Figure 5 are only intended for illustrating two characteristics of moiré patterns and illustrating exemplary shapes of moiré patterns. Image content other than the moiré patterns in Figure 4 and Figure 5 are not limiting factors.

Reference is made to Figure 6, which is a schematic flowchart of a method for image processing according to an embodiment of the present disclosure. This embodiment may be performed by a smart device such as a smartphone, a tablet computer, a personal computer, and even a server. An image processing model is constructed, trained, and optimized based on the aforementioned characteristics of moiré patterns, and such model is further utilized to remove moiré patterns. Specifically, the method includes following steps S601 and S602.

In step S601, a smart device obtains an original image.

As described above, the original image may be an image having moiré patterns, which is obtained through photographing content displayed on an electronic display, or which obtained locally or via a network. The user activates a relevant application to acquire the original image that needs to be processed, such that a clearer image without moiré patterns, a document that can be edited and shared, or the like may be obtained.

In step S602, the smart device removes moiré patterns from the original image through an image processing model to obtain a target image.

The image processing model is a network model pre-trained according to a training set of moiré pattern data. The image processing model includes a multi-band module. The multi-band module is configured to process the original image to obtain an N-layer Laplacian pyramid related to the original image, and obtain a first processing-result feature map based on feature maps corresponding to N spatial frequency bands of the N-layer Laplacian pyramid. The target image is obtained based on the first processing-result feature map. N is a positive integer greater than or equal to 2.

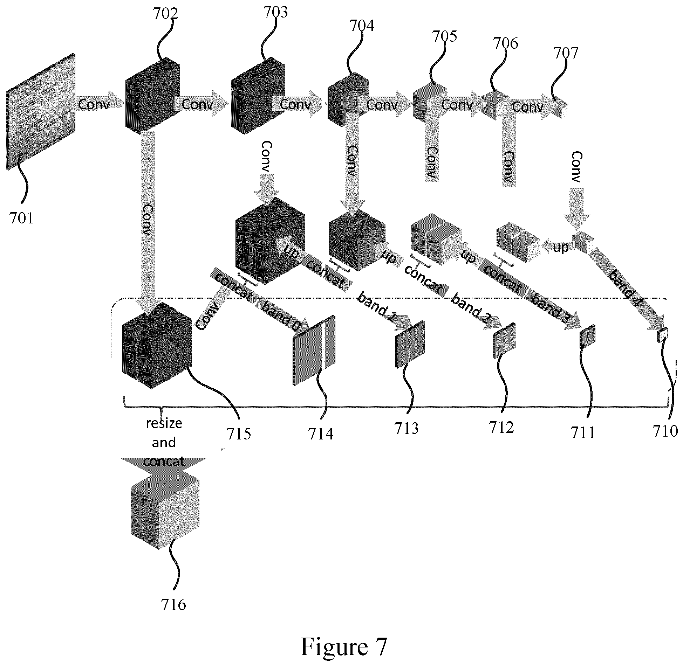

In an embodiment, a structure of the image processing model is as shown in Figure 7. In one aspect, the Laplacian pyramid is introduced to obtain the feature map of the multiple spatial frequency bands corresponding to the original image. In another aspect, the feature maps of the multiple spatial frequency bands further reflect feature maps of the original image in different scales. Shapes of the moiré patterns in different spatial frequency bands and under different scales are fully considered in the image processing model. Hence, in comparison with conventional technology, the Laplacian pyramid is introduced into the image processing model, and the image processing model suitable for removing moiré patterns is obtained based on supervised or self-supervised training in embodiments of the present disclosure. Such image processing model can remove moiré patterns from an image more conveniently and thoroughly in comparison with conventional models that are constructed based on edge extraction.

Reference is made to Figure 7. First, the image processing model performs M (= 6) sequential initial analyses on the original image 701 to obtain initial feature maps under N (= 5) scales corresponding to the original image. In an embodiment, the Laplacian pyramid has five layers, and correspondingly the M (= 6) initial analyses may include following steps.

The original image 701 under an initial scale is subject to down-scaling convolution processing, or subject to down-sampling then convolution, to obtain an initial feature map 702 under an 1/2 scale.

The initial feature map 702 under 1/2 scale is directly subject to convolution to obtain an initial feature map 703 under 1/2 scale. In some embodiments, the directly convolution on the initial feature map 702 for obtaining the initial feature map 703 is an optional step.

The initial feature map 703 under 1/2 scale is subject to down-scaling convolution, or subject to down-sampling then convolution, to obtain an initial feature map 704 under 1/4 scale. In a case that there is no initial feature map 703, the above processing may be directly performed on the initial feature map 702 under 1/2 scale to obtain the initial feature map 704 under 1/4 scale.

The initial feature map 704 under 1/4 scale is subject to down-scaling convolution, or subject to down-sampling then convolution, to obtain an initial feature map 705 under 1/8 scale.

The initial feature map 705 under 1/8 scale is subject to down-scaling convolution, or subject to down-sampling then convolution, to obtain an initial feature map 706 under 1/16 scale.

The initial feature map 706 under 1/16 scale is subject to down-scaling convolution, or subject to down-sampling then convolution, to obtain an initial feature map 707 under 1/32 scale.

It can be appreciated that M = 6 and N = 5 are only exemplary. In other embodiments, M = N or M > N, and M and N each may have another integer value.

The foregoing initial feature maps under different scales, after being obtained, are subject to convolution for intermediate feature maps, respectively. Thereby, the intermediate feature maps under N scales are correspondingly obtained. Then, up-sampling convolution, starting from the intermediate feature map corresponding to the initial feature map 707, is performed layer by layer. A result of the up-sampling convolution is concatenated with the intermediate feature map under a same scale, then a result of the concatenated result is subject to next up-sampling convolution, and the concatenation repeats. The above process is performed until a Laplacian pyramid is generated, the Laplacian pyramid including five feature maps that are in different spatial frequency bands and under different scales.

In Figure 7, the feature maps 710 to 714 correspond to the N spatial frequency bands, respectively, which are included in the Laplacian pyramid. The feature map 710 corresponds to the fifth spatial frequency band ("band4" in Figure 7). The feature map 711 corresponds to the fourth spatial frequency band ("band3" in Figure 7). The feature map 712 corresponds to the third spatial frequency band ("band2" in Figure 7). The feature map 713 corresponds to the second spatial frequency band ("band1" in Figure 7). The feature map 714 corresponds to the first spatial frequency band ("band0" in Figure 7). In this embodiment, the fifth spatial frequency band is the top layer of the Laplacian pyramid.

The concatenation described herein is an operation in designing a network structure of the image processing model. The concatenation is configured to combine features, and may specifically refer to fusing features extracted by multiple convolution frameworks for extracting the feature, or fusing information from output layer(s). In another embodiment, the concatenation herein may be replaced with addition, and the addition may refer to direct superposition between information.

In an embodiment, the feature maps corresponding to the N spatial frequency bands may be subject to size adjustment and concatenation to obtain a first processing-result feature map 716. Alternatively, the feature maps corresponding to the N spatial frequency bands and a predicted feature map 715 are subject to size adjustment and concatenation to obtain the first processing-result feature map 716.

When training the image processing model, there is a training image having moiré patterns and a supervision image (having no moiré pattern) corresponding to the training image. In one aspect, the training image is inputted into the image processing model, as shown in Figure 7, to obtain model-predicted feature maps of N (for example, equal to 5) spatial frequency bands corresponding to an N-layer (for example, five-layer) Laplacian pyramid. In another aspect, Laplacian pyramid processing is directly performed on the supervision image to obtain supervision feature maps of the N (for example, equal to 5) spatial frequency bands. Losses (loss function values) between the model-predicted feature maps and the supervision feature maps are calculated. Relevant convolution parameters in each convolution as shown in Figure 7 are iteratively adjusted to minimize the calculated N (for example, equal to 5) losses. After trained based on of a large quantity of training images and supervision images, the obtained image processing model takes into account both the scale characteristic and the spatial-frequency-band characteristic of moiré patterns. Hence, the obtained image processing model can implement removal of moiré patterns in images more conveniently and comprehensively.

In another embodiment, a corresponding image may be restored based on the feature map of each layer of the Laplacian pyramid. The feature maps corresponding to the spatial frequency bands of the Laplacian pyramid (on a basis of the five-layer Laplacian pyramid), or the feature maps corresponding to the spatial frequency bands of the Laplacian pyramid and the predicted feature map, which all correspond to the training image, are subject to size adjustment and concatenation in the image processing model, as shown in Figure 7, to obtain the first processing-result image in which the moiré patterns are removed. In this embodiment, a loss (a loss function value) between the target image and the supervision image, both corresponding to the training image, is directly calculated, and relevant convolution parameters in each convolution as shown in Figure 7 are iteratively adjusted to minimize calculated loss. After trained based on of a large quantity of training images and supervision images, the obtained image processing model takes into account both the scale characteristic and the spatial-frequency-band characteristic of moiré patterns. Hence, the obtained image processing model can implement removal of moiré patterns in images more conveniently and comprehensively

When the image processing model performs recognition on the original image, the original image to be processed serves directly as an input of the image processing model. The target image is finally outputted after convolution, sampling, and other processing, of which parameters has been optimized. In the target image, the moiré patterns are removed throughout multiple spatial frequency bands and multiple scales.

According to embodiments of the present disclosure, difference of moiré patterns among different scales and different spatial frequency bands are considered. A multi-band module constructed based on Laplacian pyramid is designed in the image processing model for removing moiré patterns. The feature maps of the multiple frequency bands of the Laplacian pyramid are utilized. Thereby, the image processing model capable of removing moiré patterns thoroughly under different scales and different frequency bands is trained, and the removal of moiré patterns is achieved conveniently.

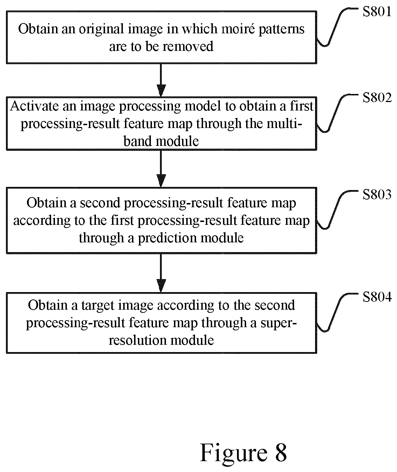

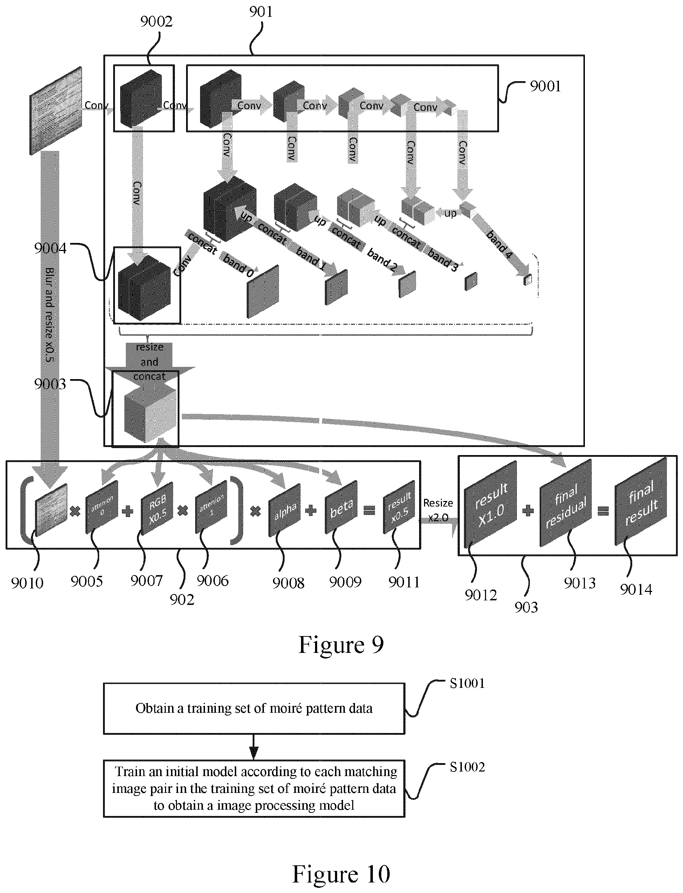

The moiré patterns in images can be well removed based on characteristics, which are considered in the foregoing establishment of the image processing model, of the moiré patterns. A research further reveals that moiré patterns in a flat region can be removed after the original image is blurred. Therefore, these flat regions may be directly used to constitute a final result without learning of the network. Moreover, a condition of ambient light is generally not ideal for an image having moiré patterns, and hence brightness of the image is not balanced. In a case that illumination is explicitly expressed, the model may pay more attention to learning how to remove the moiré patterns. On such basis, the method for image processing according to embodiments of the present disclosure is further described below in conjunction with Figure 8 and Figure 9.

Figure 8 is a schematic flowchart of another method for image processing according to an embodiment of the present disclosure. The method is executable by a smart device such as a smartphone, a tablet computer, or a personal computer. The method includes the following steps S801 to S805.

In step S801, a smart device obtains an original image.

After obtaining the original image, the smart device may activate an image processing model to perform processing of moiré pattern removal on the original image to obtain a target image. A specific process may be described as follows.

Reference is made to Figure 9. In an embodiment, the image processing model includes a multi-band module 901, a prediction module 902, and a super-resolution module 903. When training the image processing model, a result of training processing in the multi-band module 901, a result of training processing in the prediction module 902, and a result of training processing in the super-resolution module 903 need to be combined to calculate a comprehensive loss, such that relevant model parameters in the multi-band module 901, the prediction module 902, and the super-resolution module 903 can be optimized to minimize a loss corresponding to the overall calculation. It is appreciated that as an alternative, only a loss corresponding to a training result finally outputted by the super-resolution module 903 may be calculated, such that relevant model parameters in the multi-band module 901, the prediction module 902, and the super-resolution module 903 can be optimized to minimize the loss calculated according to such training result.

In step S802, the smart device activates an image processing model to obtain a first processing-result feature map through the multi-band module.

The multi-band module 901 is constructed based on the Laplacian pyramid. In an embodiment, the step S802 may include following steps S8021 to S8024.

In step S8021, the smart device activates the image processing model to perform, through the multi-band module 901, M initial analyses on the original image to obtain initial feature maps under N scales. M is a positive integer greater than or equal to 2. The initial analysis includes performing down-sampling and then convolution on the original image, or performing down-scaling convolution on the original image. M is greater than or equal to N, and both M and N are positive integers. The initial feature maps under N scales are content in the box 9001 as shown in Figure 9. In an embodiment, M is greater than N, and there may be M = N+1. Therefore, a feature map under 1/2 scale, which is content in the box 9002 as shown in Figure 9, is additionally obtained after the M initial analyses.

In step S8022, the smart device performs convolution on the initial feature maps under N scales to obtain intermediate feature maps under N scales, respectively. The intermediate feature maps under N scales are five feature maps to which arrows point downward from the initial feature maps as shown in Figure 9.

In step S8023, the smart device obtains feature maps corresponding to N spatial frequency bands of an N-layer Laplacian pyramid according to the intermediate feature maps under N scales. In the newly obtained feature maps, a feature map of the N^{th} spatial frequency band is obtained according to an intermediate feature map having the N^{th} smallest scale among the intermediate feature maps. In the newly obtained feature maps, a feature map of the (N-i)^{th} spatial frequency band is obtained according to the N^{th} intermediate feature map, the (N-i)^{th} intermediate feature map, and all intermediate feature maps between the above two, where i is a positive integer greater than or equal to 1 and less than N.

Figure 9 is taken as an example. The intermediate feature map having the smallest scale serves as a feature map corresponding to the 5^{th} spatial frequency band. A feature map corresponding to the 4^{th} (that is, 5-1 and i = 1) spatial frequency band is obtained by concatenating the 4^{th} intermediate feature map and a feature map that is obtained by performing up-sampling convolution on the 5^{th} intermediate feature map. A feature map corresponding to the 3^{rd} (that is, 5-2 and i = 2) spatial frequency band is obtained according to the 3^{rd} intermediate feature map, the 4^{th} intermediate feature map, and the 5^{th} intermediate feature map. Specifically, a feature map obtained by performing up-sampling convolution on the fifth intermediate feature map is concatenated with the 4^{th} intermediate feature map, and a feature map obtained by performing up-sampling convolution on such concatenated feature map is then concatenated with the 3^{rd} intermediate feature map, so as to obtain the feature map corresponding to the 3^{rd} spatial frequency band. The other feature maps can be obtained by analogy.

In step S8024, the smart device obtains a first processing-result feature map according to the feature maps corresponding to the N spatial frequency bands. After obtaining the feature maps corresponding to the N spatial frequency bands, the smart device may perform scale adjustment and concatenation directly based on the feature maps corresponding to the spatial frequency bands to obtain a large feature map, which is called the first processing-result feature map.

In an embodiment, the step S8024 may further include following steps. The smart device obtains a predicted feature map, and the predicted feature map is obtained according to the N^{th} intermediate feature map, the 1^{st} intermediate feature map, and all intermediate feature maps between the above two. As shown in Figure 9, the predicted feature map is shown in the box region 9004 in Figure 9, and is obtained by concatenating two feature maps: one is the intermediate feature map obtained through performing convolution on the initial feature map 9002, and the other is the feature maps that is obtained through repeated "up-sampling convolution plus concatenation" that starts from the fifth intermediate feature map. The feature maps, whose scales are smaller than a scale of the predicted feature map, among the feature maps corresponding to the N spatial frequency bands are resized to a scale identical to the scale of the predicted feature map. The first processing-result feature map is obtained according to the predicted feature map and the resized feature maps corresponding to the spatial frequency bands. After being resized, the feature maps corresponding to the N spatial frequency bands are concatenated with the predicted feature map to obtain a large feature map, which is the first processing-result feature map. The large feature map is a feature map 9003 as shown in Figure 9. Outputs of the five frequency bands are multiplexed, because these outputs are theoretically linear to the final output and hence are high-level features containing abundant information.

After obtaining the feature maps corresponding to the N spatial frequency bands, the smart device may obtain a target image according to the feature maps corresponding to the N spatial frequency bands, or obtain a target image according to the first processing-result feature map. The smart device may directly obtain the target image based on the first processing-result feature map by performing following steps.

In step S803, the smart device obtains a second processing-result feature map according to the first processing-result feature map through a prediction module.

The prediction module is constructed based on the attention mechanism, and the step S803 may further include the following steps S8031 and S8032.

In step S8031, the smart device performs blurring on the original image to obtain a blurred feature map.

In step S8032, the smart device obtains the second processing-result feature map according to the first processing-result feature map and the blurred feature map through the prediction module.

The blurring may be Gaussian blurring.

As shown in Figure 9, the prediction module constructed based on the attention mechanism predicts, through the network, multiple feature maps for RGB channels based on the first processing-result feature map. In some embodiment, the multiple feature maps for RGB channels include a pixel-wise weighting parameter feature map *attention0* (for example, a feature map 9005 in Figure 9), a pixel-wise weighting parameter feature map *attention1* (for example, a feature map 9006 in Figure 9), an RGB output feature map *RGB* (for example, a feature map 9007 in Figure 9), an illumination multiplication coefficient feature map *alpha* (for example, a feature map 9008 in Figure 9), and an illumination addition coefficient feature map *beta* (for example, a feature map 9009 in Figure 9).

In an embodiment, a preliminary result feature map *RGBweighted* is calculated based on *RGBweighted = attention0 * blured + attention1 * RGB.* The *blured* is the blurred feature map 9010 that is obtained by blurring the original image as mentioned above. In the image processing model as shown in Figure 9, the blurred feature map 9010 is a feature map obtained by blurring the original image and adjusting a size of the blurred original image. A size of the blurred feature map is identical to that of the first processing-result feature map. In an embodiment, the pixel-wise weighted parameter feature map *attention0,* the pixel-wise weighted parameter feature map *attention1,* and the RGB output feature map *RGB* are obtained through respective convolution on the first processing-result feature map.

Illuminance coefficients are used to eliminate inappropriate illumination variations according to the feature map *RGBweighted* to acquire a feature map *result.*

*result = RGBweighted * alpha + beta. alpha* and *beta* are also obtained through convolution on the first processing-result feature map.

During model training, convolution parameters of the convolution from the first processing-result feature map to the feature maps *attention0, attention1, RGB, alpha* and *beta* are iteratively adjusted and optimized according to a large quantity of loss function values, so as to obtain appropriate convolution parameters. Thereby, appropriate *attention0, attention1, RGB, alpha,* and *beta* that are capable to help remove moiré patterns and restore original image quality can be obtained from output results of the multi-band module.

The feature map 9011, *result,* is the second processing-result feature map. Hence, a result of moiré pattern removal under 1/2 scale is obtained, and the illumination variations are restored.

After the second processing-result feature map is obtained, the target image may be obtained according to the second processing-result feature map. Specifically, following super-resolution processing may be further performed to obtain the final target image. In an embodiment, the target image may be directly obtained according to the second processing-result feature map without the super-resolution processing performed by a super-resolution module.

In step S804, the smart device obtains a target image according to the second processing-result feature map through a super-resolution module.

The step S804 further includes following steps. The smart device obtains a reference feature map according to the first processing-result feature map, and obtains an intermediate-result feature map through processing the second processing-result feature map. A scale of the reference feature map is identical to that of the original image, and a scale of the intermediate-result feature map is identical to that of the original image. The smart device obtains the target image according to the reference feature map and the intermediate-result feature map through the super-resolution module 903.

After obtaining the second processing-result feature map, the smart device performs a super-resolution up-sampling on the second processing-result feature map under 1/2 scale to obtain a final result. In an embodiment, the second processing-result feature map under 1/2 scale is first enlarged to twice size to obtain an RGB image of the original resolution, which is denoted as *result 1.0,* that is, 9012. The *result 1.0* represents a feature map obtained by enlarging the second processing-result feature map to twice size. A residual *final residual,* that is, 9013 is predicted through up-convolution based on the first processing-result feature map. The *final_residual* also represents a feature map. The final result is a feature map 9014 of the target image that can be outputted. The feature map 9014 of the target image may be calculated as *final result = result 1.0 +final residual,* so that the super-resolution is completed. The target image may be restored based on such feature map, on which the super-resolution has been performed.

In step S805, the smart device outputs the target image.

Specifically, the smart device may display the target image on a display interface for a user, so that the user can use functions such as storage, sharing, editing, and even reprocessing. In an embodiment, the smart device may further display the target image and the original image simultaneously on the display interface, so that the user is able to learn a difference between the original image and the target image.

A difference exhibited by moiré patterns in different scales and different spatial frequency bands is considered according to embodiments of the present disclosure. A multi-scale model constructed based on the Laplacian pyramid is designed in the image processing model for removing moiré patterns. The feature maps of multiple frequency bands of the Laplacian pyramid are applied to train the image processing model capable to remove moiré patterns throughout different scales and different frequency bands. In addition, the prediction module based on the attention mechanism is further provided on a basis of the multi-scale model. Hence, the characteristic a part of the moiré patterns can be directly removed from a blurred image, and the image brightness characteristics, are considered. The super-resolution module is further applied to achieve a better effect of moiré pattern removal conveniently.

Figure 10 is a schematic flowchart of training an image processing model according to an embodiment of the present disclosure. The training is mainly performed by a smart device such as a server or a personal computer. The image processing model mentioned in the foregoing embodiments can be obtained through the training process disclosed herein. The training process includes the following steps S1001 and S1002.

In step S1001, a smart device obtains a training set of moiré pattern data.

The training set of moiré pattern data includes matching image pairs, each of which includes a training image and a supervision image. The training image has moiré patterns, while the supervision image has no moiré patterns.

In step S1002, the smart device trains an initial model according to each matching image pair in the training set of moiré pattern data to obtain the image processing model.

In an embodiment, the training on the image processing model is supervised. A pre-known result is compared with an output result of the image processing model processing the training image. In a case that a condition is met (for example, an L2 loss is minimum), the image processing model is considered to be valid for the training image. Otherwise, model parameters in of image processing model are adjusted until the condition is met. A large quantity of training images and corresponding supervision images are used to train the image processing model, and thereby an image processing model capable of removing moiré patterns in most images can be obtained.

In an embodiment, when establishing the training set of moiré pattern data, the matching image pairs are obtained through processing original images. According to embodiments of the present disclosure, manners such as simulation processing and preprocessing the original image are designed for determining the matching image pairs. The matching image pairs obtained in such manners lead to better training on the image processing model, and the whole process is fully automatic. Thereby, automated and intelligent training is achieved, and training efficiency is improved for the image processing model.

In an embodiment, obtaining the training set of moiré pattern data includes following steps. The supervision image is obtained according to an initial image, and the training image having added moiré patterns is obtained according to the initial image. The above steps may be performed on a smart device that performs training on the image processing model or that uses the image processing model. The simulation processing may be alternatively performed on the initial image data by a dedicated simulation device.

In an embodiment, obtaining the training image having added moiré patterns according to the initial image includes simulation processing on the initial image data, which includes the following steps S11 to S15.

In step S11, the smart device decomposes each pixel in the initial image into three sub-pixels, which are parallel aligned, to obtain a sub-pixel image. Each sub-pixel corresponds to one color, and colors in the initial image include red, green, and blue (RGB). The smart device decomposes each pixel in the initial image data into three sub-pixels that are parallel aligned, and each sub pixel has a value equal to one of RGB values of the original pixel.

In step S12, the smart device adjusts a size of the sub-pixel image to obtain a first intermediate image having a size identical to a size of the initial image data. That is, the new sub-pixel image is resized to original resolution to obtain the first intermediate image.

In step S13, the smart device sets a grayscale of each pixel, of which the grayscale is lower than a first threshold, in the first intermediate image to be equal to a second threshold to obtain a second intermediate image. The smart device adjusts pixels whose grayscales approximate zero to a specific grayscale greater than 0. For example, pixels whose grayscales are less than a value, for example, 5 or 10, are set to a grayscale of 10. Thereby, simulated is a characteristic that even a pure black image still has faint illumination on a display. After the second intermediate image is obtained, the gamma is further adjusted to make the outputted image imitate a visual effect due to the display. In an embodiment, the gamma may be adjust to an arbitrary value, for example, a value between 0.8 and 1.5.

In step S14, the smart device performs radial distortion on the second intermediate image to obtain a first distorted image, which simulate the image distortion due to a curvature of the display.

In step S15, the smart device performs optimization, which is for simulating camera imaging, on the first distorted image to obtain the training image having added moiré patterns.

The step S15 may further include the following steps S151 to S154, so that the obtained training image is closer to actual camera photographing.

In step S151, the smart device performs perspective transformation on the first distorted image according to a first perspective-transformation parameter to obtain a tilting-simulated image. The perspective transformation is performed on the first distorted image to simulate image tilting due to a camera sensor not facing a photographed screen directly.

In step S152, the smart device processes the tilting-simulated image according to a brightness distribution feature of imaging of a camera to obtain a brightness-simulated image. The smart device performs sampling interpolation again, on the tilting-simulated image outputted in the previous step, through a color filter array (CFA) sampling algorithm of the Bayer array. In an embodiment, the gamma of the re-interpolated image may be adjusted again to simulate the brightness distribution feature during imaging of the camera.

In step S153, the smart device adds image noise into the brightness-simulated image to obtain a noise-simulated image. The noise-simulated image has image noise. Specifically, the Gaussian noise may be added into an outputted image to simulate image noise generated during imaging of an imaging sensor in an actual camera.

In step S154, the smart device processes the noise-simulated image according to a preset illumination coefficient to obtain an illumination-simulated image. The smart device multiplies different regions of the image by different illumination coefficients, in order to simulate non-uniform illumination in an image when photographing the screen.

The illumination-simulated image that is finally obtained may serve as the final training image having added moiré patterns.

In an embodiment, obtaining the supervision image according to the initial image includes steps S21 and S22.

In step S21, the smart device performs radial distortion on the original data to obtain a second distorted image.

In this step, the radial distortion is same as that described in the above step S14.

In step S22, the smart device performs perspective transformation on the second distorted image according to the first perspective-transformation parameter to obtain the supervision image.

In this step, the perspective-transformation parameter for the perspective transformation is same as that described in the above step S151. The smart device may combine the supervision image and the training image, which is obtained as describe above, directly to form one matching image pair.

Many parameters in the above simulation processing may be flexibly adjusted, such that various matching image pairs may be obtained. More images that are actually captured and have moiré patterns may be added into the training set of moiré pattern data for better training on the image processing model. A difficulty of using the actually captured image having moiré patterns is how to perform pixel-level alignment between the captured image and the initial image. In embodiments of the present disclosure, the image alignment has two stages. First, feature-point matching is performed on the two images (i.e., the initial image, and an image obtained by photographing the initial image displayed on a screen) to compute perspective transformation. Then, an optical flow motion field is calculated for the transformed image to achieved finer alignment, such that image distortion, which the projective transformation cannot represent, is compensated. Specifically, obtaining the training set of moiré pattern data may include steps S31 to S33.

In step S31, the smart device displays the initial image on an electronic display screen, and photographs the displayed initial image data to obtain the training image.

In step S32, the smart device performs feature-point matching and optical flow alignment on the initial image data with respect to the training image to obtain the supervision image.

In step S33, the smart device constructs the matching image pair based on the training image and the corresponding supervision image.

Specifically, the step S32 may include steps S321 to S323.

In step S321, the smart device performs feature-point matching between the training image and the initial image, calculates a second perspective-transformation parameter according to a result of the feature-point matching, and performs perspective transformation on the initial image according to the second perspective-transformation parameter to obtain a transformed initial image.

The step S321 is a process of feature-point matching. The training image and the initial image may be denoised before feature points of the two are detected and calculated. In an embodiment, the feature points may be detected by using a non-local-means algorithm, and further by using the features from accelerated segment test (FAST) algorithm. Then, values of the detected features may be calculated by using various algorithms, such as scale-invariant feature transform (SIFT), speeded up robust features (SURF), AKAZE (which is an image search method that can find matching keypoints between two images), ORB (which an algorithm for feature extraction and feature description), or binary robust invariant scalable keypoints (BRISK). Each algorithm may be used to perform independent brute force matching, and votes on each feature-point pair of a matching result. In a case that there are more than Y algorithms support a target result of feature-point matching, such result is considered to be correct. Thereby, the obtained result of the feature-point matching has high credibility. Afterwards, the second perspective-transformation parameter is calculated based on such result of the feature-point matching, and the initial image is transformed towards the training image to obtain a preliminary matched result.

In step S322, the smart device calculates a correspondence table, for pixel coordinates, between the training image and the transformed initial image through an optical flow method.

This step corresponds to the optical flow alignment, and specifically, may be an image distorting process based on the optical flow method. The matched result based on the second perspective-transformation parameter is not completely pixel-level alignment, and there is an average difference of 10 pixels according to statistics on experiment results. Such different is mainly due to screen curvature and lens distortion. In embodiments of the present disclosure, the optical flow method is further used to eliminate the final error. Specifically, a dense optical flow motion field may be calculated to obtain the correspondence table of pixel coordinates between the training image and the transformed initial image, and then another transform is performed. A variational optical flow algorithm is finally selected according to an analysis on experiment results. An optical flow obtained through such algorithm can achieve a better balance between smoothness and accuracy. In practice, an image gradient serves a data item of the variational optical flow method, which can effectively eliminate brightness difference between the captured image and the initial image. In addition, Gaussian blurring should be first performed on both the training image and the transformed initial image, so as to reduce an influence of moiré-pattern noise and make the image smoother and more derivable.

In step S323, the smart device performs perspective optimization on the transformed initial image according to the correspondence table to obtain the supervision image corresponding to the training image.

After the steps S321, S322, and S323, the training image and the supervision image may be substantially aligned at a pixel level. The initial model is trained based on the training image and the supervision image that are aligned at the pixel level to obtain the image processing model. Hence, it is guaranteed that the target image, which is obtained after the image processing model performs moiré pattern removal on an image having moiré patterns, has normal scale and normal content, and content inconsistency between the target image and the original image having moiré patterns is prevented.

The initial model may be trained after a large quantity of matching image pairs are obtained. A structure of the initial model may refer to the structure as shown in Figure 9. The training on the initial model may refer to any or a combination of the following model training schemes.

A first model training scheme is as follow.

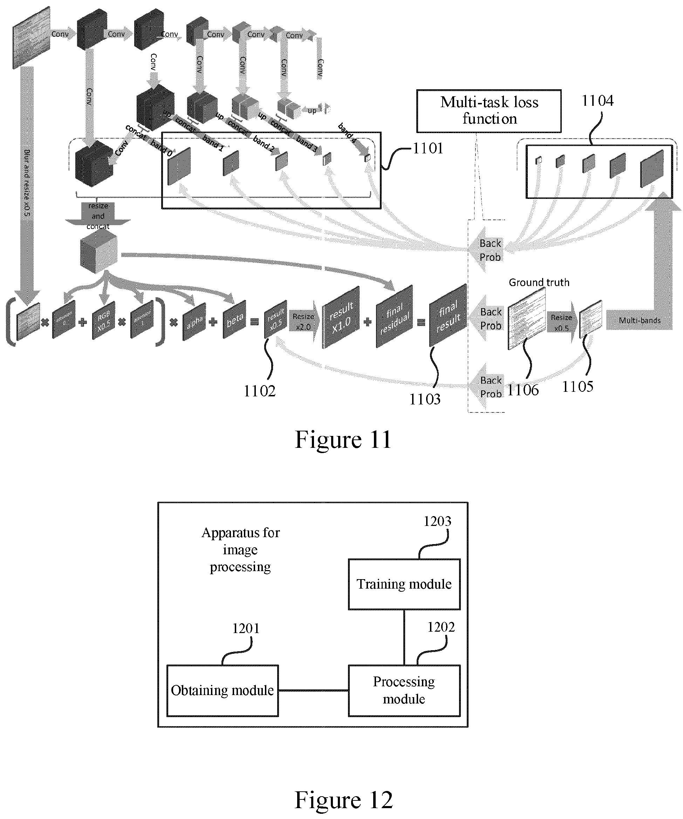

In an embodiment, an initial model or an initial image processing model may include a multi-band module, a prediction module based on the attention mechanism, and a super-resolution module. A result outputted by the super-resolution module is a model output result. In the training, loses of the multi-band module, the prediction module, and the super-resolution module may be determined through the L2 loss function based on their training results respectively. Model parameters may be adjusted and optimized according to the losses. Figure 11 is a schematic diagram of supervised training on an initial model based on three output results of a model.

When the initial model includes the multi-band module, the prediction module, and the super-resolution module, training the initial model according to each matching image pair in the training set of moiré pattern data includes following steps.

The training image in a matching image pair of the training set serves as an input of the initial model. After processing in the initial model, a first result 1101 outputted by the multi-band module, a second result 1102 outputted by the prediction module, and a third result 1103 outputted by the super-resolution module are obtained. The first result 1101 includes feature maps of N spatial frequency bands corresponding to an N-layer Laplacian pyramid of the training image. As shown in Figure 11, the feature maps of five spatial frequency bands may be obtained from a five-layer Laplacian pyramid. In such case, the first result includes the five feature maps corresponding to the five spatial frequency bands, the second result includes a second processing-result feature map corresponding to the training image, and the third result includes a target image corresponding to the training image;

The supervision image in the matching image pair is subject to N-layer Laplacian pyramid processing to obtain feature maps of N spatial frequency bands corresponding to the supervision image. N basic losses between the feature maps of the N spatial frequency bands corresponding to the supervision image and the feature maps of the N spatial frequency bands in the first result 1101 are obtained. That is, the supervision image is subject to N-layer Laplacian pyramid processing to obtain the feature maps of the N spatial frequency bands of the supervision image, and these feature maps are five feature maps in the feature map set 1104 as shown in Figure 11. The losses may be calculated between each feature map in the feature map set 1104 and a corresponding feature map under the same scale in the first result 1101 based on the L2 loss function. In Figure 11, five basic losses may be obtained.

A first loss between an image obtained through resolution processing on the supervision image and the second processing-result feature map 1102 is obtained. That is, an image 1105 is obtained after the supervision image is subject to resolution processing, and loss value may be calculated between the second result 1102 and the image 1105 based on the L2 loss function;

A second loss between the supervision image 1106 and the third result 1103 is obtained. That is, a loss may be calculated between the supervision image 1106 and the feature map which is the third result 1103 based on the L2 loss function.

Model parameters of the initial model are optimized according to the N basic losses, the first loss, and the second loss to obtain the image processing model.

On such basis, there are five L2 loss functions, one L2 loss function, and one L2 loss function of three types, respectively, for the model as shown Figure 11. A final loss function may be obtained by directly adding such seven L2 loss function. Since a difference in pixel quantities leads to a difference in magnitude for each L2 loss, the direct addition is proper for weighting.

In an embodiment, an initial model or an initial image processing model may include a multi-band module. A result outputted by the multi-band module is a model output result. In the training, a loss may be determined through the L2 loss function based on a training result outputted by the multi-band module, and model parameters may be adjusted and optimized according to such loss.

In an embodiment, an initial model or an image processing model may include a multi-band module and a prediction module based on the attention mechanism. A result outputted by the prediction module is a model output result. In the training, losses of the multi-band module and the prediction module may be determined through the L2 loss function based on training results outputted by the two modules, respectively, and model parameters may be adjusted and optimized according to such losses.

A second model training scheme is as follows.

In an embodiment, it is further considered that an image having moiré patterns exhibit different moiré patterns under various scales, in order to improve the moiré pattern removal capability of the image processing model. Multi-scale learning is performed during training the initial model of the image processing model. Specifically, training the initial model according to all matching image pairs in the training set of moiré pattern data includes following steps.

Sizes of images in a target matching image pair in the training set of moiré pattern data are adjusted to obtain P deformed matching image pairs of different scales.

The initial model is trained based on the P deformed matching image pairs to obtain P losses, and model parameters of the initial model is optimized according to the P losses to obtain the image processing model.

Training samples in each matching image pair are scaled to 256x256, 384x384, 512x512, 768x768, and optionally another resolution, to obtain multiple deformed matching image pairs under different scales. Each deformed matching image pair serves as a separate piece of training data and inputted into the initial model, the initial model is trained according to the foregoing first model training method, and then a loss is calculated for such deformed matching pair. Finally, the obtained losses are added when performing the training, that is, a total loss is a sum of all losses. The model can be optimized to minimize the sum of all such losses. Thereby, each time a sample is used for training, the initial model can learn moiré patterns at different resolutions simultaneously, and the moiré pattern removal capability learned by the initial model can be more robust. Practices reveal a phenomenon that a larger resolution leads to a better effect of moiré pattern removal.

The third model training scheme is as follows.

In embodiments of the present disclosure, the model may be trained directly based on a large quantity of images having moiré patterns, such that more images having moiré patterns can be utilized in model training. In an embodiment, in the method for image processing, training on the image processing model may further include following steps.

A size of a training image in a training set of moiré pattern data is enlarged to obtain an enlarged image that has moiré-patterns and has a target size. There are no matching image pairs in such training set of moiré pattern data. That is, there are only images having moiré patterns, and no supervision images corresponding to these images, in the training set. Described in the above embodiments are a scheme of obtaining matching image pairs through, for example, simulation processing as described in the foregoing embodiments, and a scheme of obtaining matching image pairs through photographing images having moiré patterns and then performing, for example, feature-point matching and optical flow processing on such images. For example, after camera is adjusted to a position, images displayed on a computer display is photographed periodically according to an interval, while the computer display provides different image content periodically according to such interval for the camera to photograph. Thereby, it is convenient to acquire a large quantity of images having moiré patterns.

During the training, a first image processing model performs moiré pattern removal on the enlarged image having moiré patterns to obtain a moiré-pattern supervision image. A model trained, through the aforementioned method, according to all matching image pairs in the training may serve as the first image processing model. For example, after the initial model is trained through the first model training scheme and/or the second model training scheme, the obtained image processing model serves as the first image processing model. Alternatively, the first image processing model may be a model that is for removing moiré patterns and trained through another training scheme. With help of the first image processing model, self-supervised training is further performed based on a large quantity of images having moiré patterns to obtain an image processing model with better performance.

The moiré-pattern supervision image and the enlarged image having moiré patterns are scaled to obtain multiple moiré pattern image pairs. Model parameters of the first image processing model are optimized based on the multiple moiré pattern image pairs to obtain the image processing model.

The multi-scale learning process corresponding to the second model training scheme reveals that the moiré patterns can be removed more easily by the model when the image having moiré patterns is scaled to higher resolution. The self-supervised learning is performed with the first image processing model based on such revelation. When the batch of unlabeled data (that is, a large quantity of images having moiré patterns in the training set) is processed by the first image processing model, initial images having moiré patterns are enlarged to 1664x1664 (or another large scale), and then the first image processing model performs moiré pattern removal. Outputs of the first image processing model serve as ground truth, i.e., the moiré-pattern supervision images corresponding to the images having moiré patterns. The moiré-pattern matching image pairs, which are formed by the images having moiré patterns and the moiré-pattern supervision images, are scaled to, for example, 256x256, 384x384, 512x512, and 768x768, such that the first image processing model is subject to multiple-scale training again. After convergence is achieved in the training, an image processing model having a better performance is finally obtained.

In an embodiment, the newly trained model may further serve as a new first image processing model. The new first image processing mode removes moiré patterns from the images that have moiré patterns and have a scale of 1664x1664 (or another large scale), such that self-supervised training can be performed again. The above process is repeated, and one or more image processing models capable of removing moiré patterns can be obtained consequently.

In an embodiment, the model obtained through optimizing the model parameters of the first image processing model based on the multiple moiré-pattern image pairs, which are obtained through the enlargement processing and the moiré pattern removal processing of the first image processing model, serves as a first version of the image processing model.

The first version of image processing model serves as a new first image processing model, and the new first image processing model is trained based on the training set of moiré pattern data to obtain a second version of the image processing model. Further, the second version of the image processing model may be serves another new first image processing model. The process may be repeated to obtain multiple versions of the image processing model.

After two or more versions of the image processing model are obtained, removing the moiré patterns from the original image through the image processing model to obtain the target image may include following steps.

The moiré patterns are removed from the original image through the first version of the image processing model and the second version of the image processing model to obtain a first image and a second image, respectively. It is appreciated that in a case that there are multiple versions of the image processing model, the moiré patterns are removed from the original image further through another version of the image processing model to obtain another image.

The target image is obtained based on the first image and the second image. When the target image is determined based on the first image and the second image, or even based on images obtained through moiré pattern removal of more versions of image processing model, the images outputted by all versions of the image processing model may be compared in parts or even pixel-by-pixel, and the target image is constructed by parts or pixels that have the best effect of moiré pattern removal. That is, multiple versions of the image processing models may be obtained through multiple training processes, and different versions of the image processing model have different advantages with respect to the removal capability. Therefore, these image processing models may be independently utilized to remove the moiré patterns from the original image, and then the corresponding results are merged to obtain a good effect of moiré pattern removal.

In an embodiment, the merging includes to determine a part and/or a pixel having the smallest gradient among all corresponding parts or all corresponding pixels among all versions of the image processing model. The parts and/or the pixels having the smallest gradient among their correspondence are selected to construct the final target image. For example, an image is divided into an upper part and a lower part. A gradient of the upper part is smaller in the first image than in the second image, and a gradient of the lower part is smaller in the second image than in the first image. Therefore, the upper part of the first image and the lower part of the second image may be merged to obtain the final target image.

In an alternative embodiment, an image having the best removal effect may be directly selected as the final target image from the first image and the second image, or even from images outputted by more versions of the image processing model. The images outputted by two or more versions of the image processing model may be simultaneously displayed on an interface. A selection operation performed by a user is received, and an image selected by the such operation serves as the final target image.

After the image processing model is obtained through any above scheme, the model parameters of the image processing model may be further finely tuned through a generative adversarial network, in order to make an output result of the image processing model more realistic. A discriminator of the generative adversarial network is configured to distinguish an image outputted by a network from an "actual" image without moiré patterns, and a loss function of the discriminator calculates a classification cross entropy. A loss function of a generator of the generative adversarial network is a sum of two terms, one term is a negative discriminator loss function, and the other is an L2 loss function of a difference between a generated map and a map generated by a previous model. A purpose of the loss function of the generative adversarial network is requiring the image processing model to generate a more realistic image without moiré patterns, as well as ensuring the capability of removing moiré patterns differs little between a new image processing model and a previous image processing model.

Reference is further made to Figure 12, which is a schematic structural diagram of an apparatus for image processing according to an embodiment of the present disclosure. According to embodiments of the present disclosure, the apparatus may be disposed in a smart device, and the smart device may be a smartphone, a tablet computer, a personal computer, or another device. The apparatus includes an obtaining module 120 and a processing module 1202.

The obtaining module 1201 is configured to obtain an original image.

The processing module 1202 is configured to remove moiré patterns from the original image through an image processing model to obtain a target image. The image processing model is a network model pre-trained according to a training set of moiré pattern data. The image processing model includes a multi-band module configured to process the original image to obtain an N-layer Laplacian pyramid related to the original image, and obtain a first processing-result feature map based on feature maps corresponding to N spatial frequency bands of the N-layer Laplacian pyramid. The target image is obtained based on the first processing-result feature map; and N is a positive integer greater than or equal to 2.

In an embodiment, the processing module 1202 is further configured to: activate the image processing model to perform, through the multi-band module, M initial analyses on the original image to obtain initial feature maps under N scales, where M is a positive integer greater than or equal to 2, M is greater than or equal to N, and the initial analysis includes performing down-sampling and then convolution on the original image, or performing down-scaling convolution on the original image; perform convolution on the initial feature maps under the N scales to obtain intermediate feature maps under the N scales, respectively; obtain feature maps corresponding to N spatial frequency bands of an N-layer Laplacian pyramid according to the intermediate feature maps under the N scales; obtain the first processing-result feature map according to the feature maps corresponding to the N spatial frequency bands; and obtain the target image according to the first processing-result feature map.

In an embodiment, in the feature maps corresponding to the N spatial frequency bands, a feature map of the N^{th} spatial frequency band is obtained according to an intermediate feature map having the N^{th} smallest scale among the intermediate feature maps.

In the feature maps corresponding to the N spatial frequency bands, a feature map of the (N-i)^{th} spatial frequency band is obtained according to the N^{th} intermediate feature map, the (N-i)^{th} intermediate feature map, and all intermediate feature maps between the N^{th} intermediate feature map and the (N-i)^{th} intermediate feature map, where i is a positive integer greater than or equal to 1 and less than N.

In an embodiment, the processing module 1202 is further configured to: obtain a predicted feature map, where the predicted feature map is obtained according to the N^{th} intermediate feature map, the 1^{st} intermediate feature map, and all intermediate feature maps between the N^{th} intermediate feature map and the 1^{st} intermediate feature map; resize the feature maps, of which scales are smaller than a scale of the predicted feature map, among the feature maps corresponding to the N spatial frequency bands to a scale identical to the scale of the predicted feature map; and obtain the first processing-result feature map according to the predicted feature map and the resized feature maps.

In an embodiment, the image processing model further includes a prediction module that is based on an attention mechanism. The processing module 1202 is further configured to: perform blurring on the original image to obtain a blurred feature map; obtain a second processing-result feature map according to the first processing-result feature map and the blurred feature map through the prediction module; and obtain the target image according to the second processing-result feature map.

In an embodiment, the image processing model further includes a super-resolution module. The processing module 1202 is further configured to: obtain a reference feature map according to the first processing-result feature map, and obtain an intermediate-result feature map through processing the second processing-result feature map, where both a scale of the reference feature map and a scale of the intermediate-result feature map are identical to a scale of the original image; and obtain the target image according to the reference feature map and the intermediate-result feature map through the super-resolution module.

In an embodiment, the apparatus further includes a training module 1203.

The training module 1203 is configured to: obtain the training set of moiré pattern data, where the training set of moiré pattern data includes matching image pairs, each of which includes a training image and a supervision image, the training image has moiré patterns, and the supervision image has no moiré patterns; and train an initial model according to each matching image pair in the training set to obtain the image processing model.

In an embodiment, the training module 1203 is further configured to: decompose each pixel in an initial image into three sub-pixels, which are parallel aligned, to obtain a sub-pixel image, where each sub pixel corresponds to one color, and colors in the initial image include red, green, and blue (RGB); adjust a size of the sub-pixel image to obtain a first intermediate image having a size identical to a size of the initial image data; set a grayscale of each pixel, of which the grayscale is lower than a first threshold, in the first intermediate image to be equal to a second threshold to obtain a second intermediate image; perform radial distortion on the second intermediate image to obtain a first distorted image; and perform optimization, which is for simulating camera imaging, on the first distorted image to obtain the training image having added moiré patterns.

In an embodiment, the training module 1203 is further configured to: perform perspective transformation on the first distorted image according to a first perspective-transformation parameter to obtain a tilting-simulated image; process the tilting-simulated image according to a brightness distribution feature of imaging of a camera to obtain a brightness-simulated image; add image noise into the brightness-simulated image to obtain a noise-simulated image; and process the noise-simulated image according to a preset illumination coefficient to obtain an illumination-simulated image.

In an embodiment, the training module 1203 is further configured to: perform radial distortion on the original data to obtain a second distorted image; and perform perspective transformation on the second distorted image according to the first perspective-transformation parameter to obtain the supervision image.

In an embodiment, the training module 1203 is further configured to: display an initial image on an electronic display screen, and photographs the displayed initial image data to obtain the training image; perform feature-point matching and optical flow alignment on the initial image data, with respect to the training image, to obtain the supervision image; and construct the matching image pair based on the training image and the corresponding supervision image.

In an embodiment, the initial model includes: a multi-band module that is to be trained, a prediction module that is to be trained and based on the attention mechanism, and a super-resolution module that is to be trained.

In an embodiment, the training module 1203 is further configured to: determine the training image in each matching image pair of the training set as an input of the initial model; process the training image through the initial model to obtain a first result outputted by the multi-band module, a second result outputted by the prediction module, and a third result outputted by the super-resolution module, where the first result includes the feature maps of the N spatial frequency bands corresponding to the N-layer Laplacian pyramid of the training image, the second result includes the second processing-result feature map corresponding to the training image, and the third result includes the target image corresponding to the training image; perform N-layer Laplacian pyramid processing on the supervision image in said matching image pair to obtain the feature maps of the N spatial frequency bands of the supervision image; obtain N basic losses between the feature maps of the N spatial frequency bands of the supervision image and the feature maps of the N spatial frequency bands in the first result; obtain a first loss between an image, obtained through resolution processing on the supervision image, and the second result; and obtain a second loss between the supervision image and the third result; and optimize model parameters of the initial model according to the N basic losses, the first loss, and the second loss to obtain the image processing model.

In an embodiment, the training module 1203 is further configured to: adjust sizes of images in a target matching image pair in the training set to obtain P deformed matching image pairs of different scales; and train the initial model based on the P deformed matching image pairs to obtain P losses, and optimize model parameters of the initial model according to the P losses to obtain the image processing model.

In an embodiment, a model obtained through training based on each matching image pair in the training set serves as a first image processing model, and the training module 1203 is further configured to: enlarge a size of a training image in the training set of moiré pattern data to obtain an enlarged image that has moiré-patterns and has a target size; remove moiré patterns from the enlarged image having moiré patterns through the first image processing model to obtain a moiré-pattern supervision image; scale the moiré-pattern supervision image and the enlarged image having moiré patterns to obtain multiple moiré pattern image pairs; and optimize model parameters of the first image processing model based on the multiple moiré pattern image pairs to obtain the image processing model.

In an embodiment, a model obtained through optimizing the model parameters of the first image processing model based on the multiple moiré-pattern image pairs serves as a first version of the image processing model. The first version of the image processing model serves as a new first image processing model, and the new first image processing model is trained based on the training set of moiré pattern data to obtain a second version of the image processing model.

The image processing model includes the first version of the image processing model and the second version of the image processing model.

The processing module 1202 is further configured to remove the moiré patterns from the original image through the first version of the image processing model and the second version of the image processing model to obtain a first image and a second image, respectively; and obtain the target image based on the first image and the second image.

In embodiments of the present disclosure, detailed implementations of the modules included in the apparatus may refer to the detailed description of relevant steps in the foregoing embodiments, and are not repeated herein.

A difference exhibited by moiré patterns in different scales and different spatial frequency bands is considered according to embodiments of the present disclosure. A multi-scale model constructed based on the Laplacian pyramid is designed in the image processing model for removing moiré patterns. The feature maps of multiple frequency bands of the Laplacian pyramid are applied to train the image processing model capable to remove moiré patterns throughout different scales and different frequency bands. Thereby, removal of the moiré patterns is implemented with convenience and a better effect.

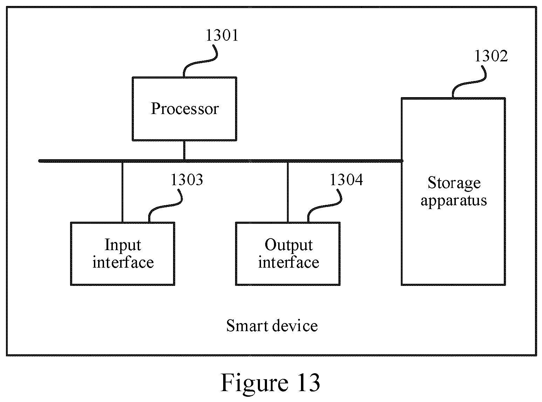

Reference is made to Figure 13, which is a schematic structural diagram of a smart device according to an embodiment of the present disclosure. The smart device may be, for example, a smartphone, a tablet computer, a personal computer, or a server. The smart device may implement functions such as data transmission, storage, data analysis, and editing. The smart device may further include various housing structures on requirement, and include a power supply, a communication interface, or the like. The smart device may include a processor 1301, a storage apparatus 1302, an input interface 1303, and an output interface 1304.

The input interface 1303 may be a user interface, a data interface, or a communication interface, and is capable to obtain data. The output interface 1304 may be a network interface capable of transmitting data to outside, and may output processed data to a display. Thereby, the display can display data such as an image in which moiré patterns has been removed and which is outputted by the output interface 1304.

The storage apparatus 1302 may include a volatile memory such as a random-access memory (RAM). The storage apparatus 1302 may include a non-volatile memory such as a flash memory or a solid-state drive (SSD). The storage apparatus 1302 may include a combination of the foregoing types of memories.

The processor 1301 may be a central processing unit (CPU). The processor 1301 may further include a hardware chip, which may be an application-specific integrated circuit (ASIC), a programmable logic device (PLD), or the like. The PLD may be a field-programmable gate array (FPGA), a generic array logic (GAL), or the like.

In an embodiment, the storage apparatus 1302 stores program instructions, and the processor 1301 invokes the program instructions stored in the storage apparatus 1302 to perform the methods and the steps described in the foregoing embodiments.

In an embodiment, the processor 1301 is configured to perform following steps.

An original image is obtained.

Moiré patterns are removed from the original image through an image processing model to obtain a target image.

The image processing model is a network model pre-trained according to a training set of moiré pattern data.

The image processing model includes a multi-band module configured to process the original image to obtain an N-layer Laplacian pyramid related to the original image, and obtain a first processing-result feature map based on feature maps corresponding to N spatial frequency bands of the N-layer Laplacian pyramid. The target image is obtained based on the first processing-result feature map; and N is a positive integer greater than or equal to 2.

In an embodiment, the processor 1301 is further configured to perform following steps.

The image processing model is activated to perform, through the multi-band module, M initial analyses on the original image to obtain initial feature maps under N scales, where M is a positive integer greater than or equal to 2, M is greater than or equal to N, and the initial analysis includes performing down-sampling and then convolution on the original image, or performing down-scaling convolution on the original image.

Convolution is performed on the initial feature maps under the N scales to obtain intermediate feature maps under the N scales, respectively.

Feature maps corresponding to N spatial frequency bands of an N-layer Laplacian pyramid are obtained according to the intermediate feature maps under the N scales.

A first processing-result feature map is obtained according to the feature maps corresponding to the N spatial frequency bands.

The target image is obtained according to the first processing-result feature map.

In an embodiment, in the feature maps corresponding to the N spatial frequency bands, a feature map of the N^{th} spatial frequency band is obtained according to an intermediate feature map having the N^{th} smallest scale among the intermediate feature maps. In the feature maps corresponding to the N spatial frequency bands, a feature map of the (N-i)^{th} spatial frequency band is obtained according to the N^{th} intermediate feature map, the (N-i)^{th} intermediate feature map, and all intermediate feature maps between the N^{th} intermediate feature map and the (N-i)^{th} intermediate feature map, where i is a positive integer greater than or equal to 1 and less than N.

In an embodiment, the processor 1301 is further configured to perform following steps.

A predicted feature map is obtained, where the predicted feature map is obtained according to the N^{th} intermediate feature map, the 1^{st} intermediate feature map, and all intermediate feature maps between the N^{th} intermediate feature map and the 1^{st} intermediate feature map.

The feature maps, of which scales are smaller than a scale of the predicted feature map, among the feature maps corresponding to the N spatial frequency bands is resized to a scale identical to the scale of the predicted feature map.

The first processing-result feature map is obtained according to the predicted feature map and the resized feature maps.

In an embodiment, the image processing model further includes a prediction module that is based on an attention mechanism. The processor 1301 is configured to perform the following steps.

Blurring is performed on the original image to obtain a blurred feature map.

A second processing-result feature map is obtained according to the first processing-result feature map and the blurred feature map through the prediction module.

The target image is obtained according to the second processing-result feature map.

In an embodiment, the image processing model further includes a super-resolution module. The processor 1301 is configured to perform following steps.

A reference feature map is obtained according to the first processing-result feature map, and an intermediate-result feature map is obtained through processing the second processing-result feature map, where both a scale of the reference feature map and a scale of the intermediate-result feature map are identical to a scale of the original image.

The target image is obtained according to the reference feature map and the intermediate-result feature map through the super-resolution module.

In an embodiment, the processor 1301 is further configured to perform following steps.

The training set of moiré pattern data is obtained, where the training set of moiré pattern data includes matching image pairs, each of which includes a training image and a supervision image. The training image has moiré patterns, and the supervision image has no moiré patterns.

An initial model is trained according to each matching image pair in the training set to obtain the image processing model.

In an embodiment, the processor 1301 is further configured to perform following steps:

Each pixel in an initial image is decomposed into three sub-pixels, which are parallel aligned, to obtain a sub-pixel image, where each sub pixel corresponds to one color, and colors in the initial image include red, green, and blue (RGB).

A size of the sub-pixel image is adjusted to obtain a first intermediate image having a size identical to a size of the initial image data.

A grayscale of each pixel, of which the grayscale is lower than a first threshold, in the first intermediate image is set equal to a second threshold to obtain a second intermediate image.

Radial distortion is performed on the second intermediate image to obtain a first distorted image.

Optimization for simulating camera imaging is performed on the first distorted image to obtain the training image having added moiré patterns.

In an embodiment, the processor 1301 is further configured to perform following steps.

Perspective transformation is performed on the first distorted image according to a first perspective-transformation parameter to obtain a tilting-simulated image.

The tilting-simulated image is processed according to a brightness distribution feature of imaging of a camera to obtain a brightness-simulated image.

Image noise is added into the brightness-simulated image to obtain a noise-simulated image.

The noise-simulated image is processed according to a preset illumination coefficient to obtain an illumination-simulated image.

In an embodiment, the processor 1301 is further configured to perform following steps:

Radial distortion is performed on the original data to obtain a second distorted image.

Perspective transformation is performed on the second distorted image according to the first perspective-transformation parameter to obtain the supervision image.

In an embodiment, the processor 1301 is further configured to perform following steps.

An initial image is displayed on an electronic display screen, and the displayed initial image data is photographed to obtain the training image.

Feature-point matching and optical flow alignment is performed on the initial image data, with respect to the training image, to obtain the supervision image.

The matching image pair is constructed based on the training image and the corresponding supervision image.

In an embodiment, the initial model includes: a multi-band module to be trained, an attention mechanism-based prediction module to be trained, and a super-resolution module to be trained.

The processor 1301 is configured to perform following steps.

The training image in each matching image pair of the training set is determined as an input of the initial model. The training image is processed through the initial model to obtain a first result outputted by the multi-band module, a second result outputted by the prediction module, and a third result outputted by the super-resolution module, where the first result includes the feature maps of the N spatial frequency bands corresponding to the N-layer Laplacian pyramid of the training image, the second result includes the second processing-result feature map corresponding to the training image, and the third result includes the target image corresponding to the training image.

N-layer Laplacian pyramid processing is performed on the supervision image in said matching image pair to obtain the feature maps of the N spatial frequency bands of the supervision image.

N basic losses between the feature maps of the N spatial frequency bands of the supervision image and the feature maps of the N spatial frequency bands in the first result are obtained. A first loss between an image, obtained through resolution processing on the supervision image, and the second result is obtained. A second loss between the supervision image and the third result is obtained.

Model parameters of the initial model are obtained according to the N basic losses, the first loss, and the second loss to obtain the image processing model.

In an embodiment, the processor 1301 is further configured to perform following steps.

Sizes of images in a target matching image pair in the training set are adjusted to obtain P deformed matching image pairs of different scales.

The initial model is trained based on the P deformed matching image pairs to obtain P losses, and model parameters of the initial model are optimized according to the P losses to obtain the image processing model.

In an embodiment, a model obtained through training based on each matching image pair in the training set serves as a first image processing model. The processor 1301 is further configured to perform following steps.

A size of a training image in a training set of moiré pattern data is enlarged to obtain an enlarged image that has moiré-patterns and has a target size.

Moiré patterns are removed from the enlarged image having moiré patterns through the first image processing model to obtain a moiré-pattern supervision image.

The moiré-pattern supervision image and the enlarged image having moiré patterns are scaled to obtain multiple moiré pattern image pairs.

Model parameters of the first image processing model are optimized based on the multiple moiré pattern image pairs to obtain the image processing model.

In an embodiment, the processor 1301 is further configured to perform following steps:

A model obtained through optimizing the model parameters of the first image processing model based on the multiple moiré-pattern image pairs is determined to be a first version of the image processing model.

The first version of the image processing model is determined to be a new first image processing model, and the new first image processing model is trained based on the training set of moiré pattern data to obtain a second version of the image processing model.

The image processing model includes the first version of the image processing model and the second version of the image processing model.

The processor 1301 is configured to perform following steps.

The moiré patterns are removed from the original image through the first version of the image processing model and the second version of the image processing model to obtain a first image and a second image, respectively.

The target image is obtained based on the first image and the second image.

In embodiments of the present disclosure, detailed implementations of the processer 1301 may refer to the detailed description of relevant steps in the foregoing embodiments, and are not repeated herein.

A difference exhibited by moiré patterns in different scales and different spatial frequency bands is considered according to embodiments of the present disclosure. A multi-scale model constructed based on the Laplacian pyramid is designed in the image processing model for removing moiré patterns. The feature maps of multiple frequency bands of the Laplacian pyramid are applied to train the image processing model capable to remove moiré patterns throughout different scales and different frequency bands. Thereby, removal of the moiré patterns is implemented with convenience and a better effect.

Those skilled in the art may understand that all or some of the procedures of the methods of the foregoing embodiments may be implemented by a computer program instructing relevant hardware. The program may be stored in a computer-readable storage medium, and the procedures of the foregoing method embodiments may be implemented when the program is executed. The storage medium may be a magnetic disk, an optical disc, a read-only memory (ROM), a random-access memory (RAM), or the like.

In some other embodiments, the present disclosure further provides a computer program product including instructions. The instructions, when executed on a computer, configured the computer to perform the method for image processing according to any foregoing embodiment.

The foregoing descriptions are merely some embodiments of the present disclosure, and are not intended for limiting the scope of the invention, which is defined by the appended claims.

## Claims

1. A computer-implemented method for image processing, comprising:
obtaining (601) an original image; and
removing (602) moiré patterns from the original image through an image processing model to obtain a target image; wherein:
the image processing model is a network model pre-trained according to a training set of moiré pattern data;
the image processing model comprises a multi-band module configured to: process the original image to obtain an N-layer Laplacian pyramid related to the original image, and obtain a first processing-result feature map based on feature maps corresponding to N spatial frequency bands of the N-layer Laplacian pyramid;
the target image is obtained based on the first processing-result feature map, and
N is a positive integer greater than or equal to 2;
wherein the method further comprises:
obtaining the training set of moiré pattern data, wherein the training set of moiré pattern data comprises matching image pairs, each of which comprises a training image and a supervision image, the training image has moiré patterns, and the supervision image has no moiré patterns; and
training an initial model according to each matching image pair in the training set to obtain the image processing model; and
wherein obtaining the training set of moiré pattern data comprises:
decomposing each pixel in an initial image into three sub-pixels, which are parallel aligned, to obtain a sub-pixel image, wherein the three subpixels correspond to red, green, and blue, respectively, in the initial image;
adjusting a size of the sub-pixel image to obtain a first intermediate image having a size identical to a size of the initial image data;
setting a grayscale of each pixel, of which the grayscale is lower than a first threshold, in the first intermediate image to be equal to a second threshold to obtain a second intermediate image;
performing radial distortion on the second intermediate image to obtain a first distorted image; and
perform optimization, which is for simulating camera imaging, on the first distorted image to obtain the training image having added moiré patterns;
wherein performing the optimization, which is for simulating camera imaging, on the first distorted image comprises:
performing perspective transformation on the first distorted image according to a first perspective-transformation parameter to obtain a tilting-simulated image;
processing the tilting-simulated image according to a brightness distribution feature of imaging of a camera to obtain a brightness-simulated image;
adding image noise into the brightness-simulated image to obtain a noise-simulated image; and
processing the noise-simulated image according to a preset illumination coefficient to obtain an illumination-simulated image.

2. The method according to claim 1, wherein removing moiré patterns from the original image through the image processing model comprises:
activating the image processing model to perform, through the multi-band module, M initial analyses on the original image to obtain initial feature maps under N scales, wherein M is a positive integer greater than or equal to 2, M is greater than or equal to N, and the initial analysis comprises:
performing down-sampling and then convolution on the original image, or
performing down-scaling convolution on the original image;
performing convolution on the initial feature maps under the N scales to obtain intermediate feature maps under the N scales, respectively;
obtaining feature maps corresponding to N spatial frequency bands of an N-layer Laplacian pyramid according to the intermediate feature maps under the N scales;
obtaining the first processing-result feature map according to the feature maps corresponding to the N spatial frequency bands; and
obtaining the target image according to the first processing-result feature map.

3. The method according to claim 2, wherein in the feature maps corresponding to the N spatial frequency bands,
a feature map of the N^{th} spatial frequency band is obtained according to an intermediate feature map having the N^{th} smallest scale among the intermediate feature maps; and
a feature map of the (N-i)^{th} spatial frequency band is obtained according to the intermediate feature maps that are from the (N-i) ^{th} intermediate feature map to the N^{th} intermediate feature map, wherein i is a positive integer greater than or equal to 1 and less than N.

4. The method according to 2 or 3, wherein obtaining the first processing-result feature map according to the feature maps corresponding to the N spatial frequency bands comprises:
obtaining a predicted feature map, wherein the predicted feature map is obtained according to the N intermediate feature maps;
resizing the feature maps, of which scales are smaller than a scale of the predicted feature map, among the feature maps corresponding to the N spatial frequency bands to a scale identical to the scale of the predicted feature map; and
obtaining the first processing-result feature map according to the predicted feature map and the resized feature maps.

5. The method according to any one of claims 2 to 4, wherein the image processing model further comprises a prediction module, and obtaining the target image according to the first processing-result feature map comprises:
performing blurring on the original image to obtain a blurred feature map;
obtaining a second processing-result feature map according to the first processing-result feature map and the blurred feature map through the prediction module; and
obtaining the target image according to the second processing-result feature map;
wherein the image processing model further comprises a super-resolution module, and the obtaining the target image according to the second processing-result feature map comprises:
obtaining a reference feature map according to the first processing-result feature map, and obtaining an intermediate-result feature map through processing the second processing-result feature map, wherein both a scale of the reference feature map and a scale of the intermediate-result feature map are identical to a scale of the original image; and
obtaining the target image according to the reference feature map and the intermediate-result feature map through the super-resolution module.

6. The method according to claim 1, wherein obtaining the training set of moiré pattern data comprises:
displaying an initial image on an electronic display screen, and photographing the displayed initial image data to obtain the training image;
performing feature-point matching and optical flow alignment on the initial image data, with respect to the training image, to obtain the supervision image; and
constructing the matching image pair based on the training image and the corresponding supervision image.

7. The method according to any one of claims 1 to 6, wherein the initial model comprises a multi-band module to be trained, a prediction module to be trained, and a super-resolution module to be trained; and
training the initial model according to each matching image pair in the training set comprises, for each matching image pair of the training set:
processing the training image in said matching image pair through the initial model to obtain a first result outputted by the multi-band module, a second result outputted by the prediction module, and a third result outputted by the super-resolution module, wherein the first result comprises the feature maps of the N spatial frequency bands corresponding to the N-layer Laplacian pyramid of the training image, the second result comprises the second processing-result feature map corresponding to the training image, and the third result comprises the target image corresponding to the training image;
performing N-layer Laplacian pyramid processing on the supervision image in said matching image pair to obtain the feature maps of the N spatial frequency bands of the supervision image;
obtaining N basic losses between the feature maps of the N spatial frequency bands of the supervision image and the first result;
obtaining a first loss between an image, obtained through resolution processing on the supervision image, and the second result;
obtaining a second loss between the supervision image and the third result; and
optimizing model parameters of the initial model according to the N basic losses, the first loss, and the second loss to obtain the image processing model.

8. The method according to any one of claims 1 to 7, wherein training the initial model according to each matching image pair in the training set comprises:
adjusting sizes of the training image and the supervision image in a target matching image pair in the training set to obtain P deformed matching image pairs of different scales;
training the initial model based on the P deformed matching image pairs to obtain P losses; and
optimizing model parameters of the initial model according to the P losses to obtain the image processing model.

9. The method according to any one of claims claim 1 to 8, wherein a model obtained through training based on each matching image pair in the training set serves as a first image processing model, and the method further comprises:
enlarging a size of a training image in the training set of moiré pattern data to obtain an enlarged image that has moiré-patterns and has a target size;
removing moiré patterns from the enlarged image having moiré patterns through the first image processing model to obtain a moiré-pattern supervision image;
scaling the moiré-pattern supervision image and the enlarged image having moiré patterns to obtain a plurality of moiré pattern image pairs; and
optimizing model parameters of the first image processing model based on the plurality of moiré pattern image pairs to obtain the image processing model.

10. The method according to claim 9, wherein:
a model obtained through optimizing the model parameters of the first image processing model based on the plurality of moiré-pattern image pairs serves as a first version of the image processing model;
the first version of the image processing model is trained based on the training set of moiré pattern data to obtain a second version of the image processing model;
the image processing model comprises: the first version of image processing model and the second version of image processing model; and
removing (602) the moiré patterns from the original image through the image processing model to obtain the target image comprises:
removing the moiré patterns from the original image through the first version of the image processing model and the second version of the image processing model to obtain a first image and a second image, respectively; and
obtaining the target image based on the first image and the second image.

11. A smart device, comprising a memory and a processor, wherein:
the memory stores program instructions for image processing, and
the processor is configured to invoke the program instructions to implement the method according to any one of claims 1 to 10.

12. A computer-readable storage medium, storing a computer program, wherein:
the computer program, when executed by a processor, implements the method according to any one of claims 1 to 10.

13. A computer program product, comprising instructions, wherein:
the instructions when executed on a computer configure the computer to perform the method for image processing according to any one of claims 1 to 10.

## Patentansprüche

1. Computerimplementiertes Verfahren zur Bildverarbeitung,, das Folgendes umfasst:
Erhalten (601) eines Originalbildes; und
Entfernen (602) von Moiré-Mustern durch ein Bildverarbeitungsmodell aus dem Originalbild, um ein Zielbild zu erhalten; wobei:
das Bildverarbeitungsmodell ein Netzwerkmodell ist, das vorab gemäß einem Trainingssatz von Moiré-Musterdaten trainiert wurde;
das Bildverarbeitungsmodell ein Multibandmodul umfasst, das zu Folgendem ausgelegt ist: Verarbeiten des Originalbildes, um eine N-Schicht-Laplace-Pyramide zu erhalten, die sich auf das Original bezieht, und Erhalten einer ersten Verarbeitungsergebnismerkmalskarte auf Basis von Merkmalskarten, die N räumlichen Frequenzbändern der N-Schicht-Laplace-Pyramide entsprechen;
das Zielbild auf Basis der ersten Verarbeitungsergebnismerkmalskarte erhalten wird, und
N eine positive Ganzzahl größer als oder gleich 2 ist;
wobei das Verfahren ferner Folgendes umfasst:
Erhalten des Trainingssatzes von Moiré-Musterdaten, wobei der Trainingssatz von Moiré-Musterdaten übereinstimmende Bildpaare umfasst, von denen jedes ein Trainingsbild und ein Kontrollbild umfasst, wobei das Trainingsbild Moiré-Muster aufweist und das Kontrollbild keine Moiré-Muster aufweist; und
Trainieren des Anfangsmodells gemäß jedem übereinstimmenden Bildpaar im Trainingssatz, um ein Bildverarbeitungsmodell zu erhalten; und
wobei das Erhalten des Trainingssatzes von Moiré-Musterdaten Folgendes umfasst:
Zerlegen von jedem Pixel in einem Anfangsbild in drei Unterpixel, die parallel ausgerichtet sind, um ein Unterpixelbild im Anfangsbild zu erhalten, wobei die drei Unterpixel rot, grün bzw. blau entsprechen;
Anpassen einer Größe des Unterpixelbildes, um ein erstes Zwischenbild zu erhalten, das eine Größe aufweist, die mit einer Größe der Anfangsbilddaten identisch ist;
Einstellen einer Grauskala von jedem Pixel, dessen Grauskala niedriger ist als ein erster Schwellwert, im ersten Zwischenbild derart, dass es einem zweiten Schwellwert entspricht, um ein zweites Zwischenbild zu erhalten;
Durchführen einer radialen Verzerrung am zweiten Zwischenbild, um ein erstes verzerrtes Bild zu erhalten; und
Durchführen einer Optimierung, die einem Simulieren einer Kamerabildgebung dient, am ersten verzerrten Bild, um das Trainingsbild zu erhalten, das hinzugefügte Moiré-Muster aufweist;
wobei das Durchführen der Optimierung, die einem Simulieren einer Kamerabildgebung dient, am ersten verzerrten Bild Folgendes umfasst:
Durchführen einer Perspektiventransformation am ersten verzerrten Bild gemäß einem ersten Perspektiventransformationsparameter, um ein simuliertes Neigungsbild zu erhalten;
Verarbeiten des simulierten Neigungsbildes gemäß einem Helligkeitsverteilungsmerkmal einer Bildgebung einer Kamera, um ein simuliertes Helligkeitsbild zu erhalten;
Hinzufügen von Bildrauschen zum simulierten Helligkeitsbild, um ein simuliertes Rauschbild zu erhalten; und
Verarbeiten des simulierten Rauschbildes gemäß einem voreingestellten Beleuchtungskoeffizienten, um ein simuliertes Beleuchtungsbild zu erhalten.

2. Verfahren nach Anspruch 1, wobei das Entfernen von Moiré-Mustern aus dem Originalbild durch das Bildverarbeitungsmodell Folgendes umfasst:
Aktivieren des Bildverarbeitungsmodells durch das Multibandmodul zum Durchführen von M anfänglichen Analysen am Originalbild, um anfängliche Merkmalskarten unter N Maßstäben zu erhalten, wobei M eine positive Ganzzahl größer als oder gleich 2 ist, M größer als oder gleich N ist und die anfängliche Analyse Folgendes umfasst:
Durchführen eines Downsampling und dann einer Faltung des Originalbildes, oder
Durchführen einer Downscalingfaltung am Originalbild;
Durchführen einer jeweiligen Faltung an den anfänglichen Merkmalskarten unter den N Maßstäben, um Zwischenmerkmalskarten unter den N Maßstäben zu erhalten;
Erhalten von Merkmalskarten, die N räumlichen Frequenzbändern einer N-Schicht-Laplace-Pyramide entsprechen, gemäß den Zwischenmerkmalskarten unter den N Maßstäben;
Erhalten einer ersten Verarbeitungsergebnismerkmalskarte gemäß den Merkmalskarten, die den N räumlichen Frequenzbändern entsprechen; und
Erhalten des Zielbildes gemäß der ersten Verarbeitungsergebnismerkmalskarte.

3. Verfahren nach Anspruch 2, wobei in den Merkmalskarten, die den N räumlichen Frequenzbändern entsprechen,
eine Merkmalskarte des N-ten räumlichen Frequenzbandes gemäß einer Zwischenmerkmalskarte erhalten wird, die den N-ten kleinsten Maßstab unter den Zwischenmerkmalskarten aufweist; und
eine Merkmalskarte des (N-i)-ten räumlichen Frequenzbandes gemäß den Zwischenmerkmalskarten erhalten wird, die von der (N-i)-ten Zwischenmerkmalskarte bis zur N-ten Zwischenmerkmalskarte reicht, wobei i eine positive Ganzzahl größer als oder gleich 1 und kleiner als N ist.

4. Verfahren nach Anspruch 2 oder 3, wobei das Erhalten einer ersten Verarbeitungsergebnismerkmalskarte gemäß den Merkmalskarten, die den N räumlichen Frequenzbändern entsprechen, Folgendes umfasst:
Erhalten einer vorhergesagten Merkmalskarte, wobei die vorhergesagte Merkmalskarte gemäß den N Zwischenmerkmalskarten erhalten wird;
Ändern der Größe der Merkmalskarten, deren Maßstäbe kleiner sind als ein Maßstab der vorhergesagten Merkmalskarte, unter den Merkmalskarten, die den N räumlichen Frequenzbändern entsprechen, auf einen Maßstab der mit dem Maßstab der vorhergesagten Merkmalskarte identisch ist; und
Erhalten einer ersten Verarbeitungsergebnismerkmalskarte gemäß der vorhergesagten Merkmalskarte und der Merkmalskarte mit der geänderten Größe.

5. Verfahren nach einem der Ansprüche 2 bis 4, wobei das Bildverarbeitungsmodell ferner ein Vorhersagemodul umfasst, und das Erhalten des Zielbildes gemäß der ersten Verarbeitungsergebnismerkmalskarte Folgendes umfasst:
Durchführen eines Weichzeichnens am Originalbild, um eine weichgezeichnete Merkmalskarte zu erhalten;
Erhalten einer zweiten Verarbeitungsergebnismerkmalskarte gemäß der ersten Verarbeitungsergebnismerkmalskarte und der weichgezeichneten Merkmalskarte durch das Vorhersagemodul; und
Erhalten des Zielbildes gemäß der zweiten Verarbeitungsergebnismerkmalskarte;
wobei das Bildverarbeitungsmodell ferner ein Superauflösungsmodul umfasst, und das Erhalten des Zielbildes gemäß der zweiten Verarbeitungsergebnismerkmalskarte Folgendes umfasst:
Erhalten einer Referenzmerkmalskarte gemäß der ersten Verarbeitungsergebnismerkmalskarte und Erhalten einer Zwischenergebnismerkmalskarte durch Verarbeiten der zweiten Verarbeitungsergebnismerkmalskarte, wobei sowohl ein Maßstab der Referenzmerkmalskarte als auch ein Maßstab der Zwischenergebnismerkmalskarte mit einem Maßstab des Originalbildes identisch sind; und
Erhalten des Zielbildes gemäß der Referenzmerkmalskarte und der Zwischenergebnismerkmalskarte durch das Superauflösungsmodul.

6. Verfahren nach Anspruch 1, wobei das Erhalten des Trainingssatzes von Moiré-Musterdaten Folgendes umfasst:
Anzeigen eines Anfangsbildes auf einem elektronischen Anzeigebildschirm und Fotografieren der angezeigten Anfangsbilddaten, um das Trainingsbild zu erhalten;
Durchführen eines Merkmalspunktabgleichs und einer optischen Flussausrichtung an den Anfangsbilddaten mit Bezug auf das Trainingsbild, um ein Kontrollbild zu erhalten; und
Konstruieren des übereinstimmenden Bildpaares auf Basis des Trainingsbildes und des entsprechenden Kontrollbildes.

7. Verfahren nach einem der Ansprüche 1 bis 6, wobei das Anfangsmodell ein zu trainierendes Multibandmodul, ein zu trainierendes Vorhersagemodul und ein zu trainierendes Superauflösungsmodul umfasst; und
das Trainieren des Anfangsmodells gemäß jedem übereinstimmenden Bildpaar im Trainingssatz umfasst für jedes übereinstimmende Bildpaar des Trainingssatzes Folgendes:
Verarbeiten des Trainingsbildes im übereinstimmenden Bildpaar durch das Anfangsmodell, um ein erstes Ergebnis, das vom Multibandmodul ausgegeben wird, ein zweites Ergebnis, das vom Vorhersagemodul ausgegeben wird, und ein drittes Ergebnis zu erhalten, das vom Superauflösungsmodul ausgegeben wird, wobei das erste Ergebnis die Merkmalskarten der N räumlichen Frequenzbänder umfasst, die der N-Schicht-Laplace-Pyramide des Trainingsbildes entsprechen, das zweite Ergebnis die zweite Verarbeitungsergebnismerkmalskarte umfasst, die dem Trainingsbild entspricht, und das dritte Ergebnis das Zielbild umfasst, das dem Trainingsbild entspricht;
Durchführen einer N-Schicht-Laplace-Pyramidenverarbeitung am Kontrollbild im übereinstimmenden Bildpaar, um die Merkmalskarten der N räumlichen Frequenzbänder des Kontrollbildes zu erhalten;
Erhalten von N Basisverlusten zwischen den Merkmalskarten der N räumlichen Frequenzbänder des Kontrollbildes und dem ersten Ergebnis;
Erhalten eines ersten Verlustes zwischen einem Bild, das durch eine Auflösungsverarbeitung am Kontrollbild erhalten wird, und dem zweiten Ergebnis;
Erhalten eines zweiten Verlustes zwischen dem Kontrollbild und dem dritten Ergebnis; und
Optimieren von Modellparametern des Anfangsmodells gemäß den N Basisverlusten, dem ersten Verlust und dem zweiten Verlust, um ein Bildverarbeitungsmodell zu erhalten.

8. Verfahren nach einem der Ansprüche 1 bis 7, wobei das Trainieren des Anfangsmodells gemäß jedem übereinstimmenden Bildpaar im Trainingssatz Folgendes umfasst:
Anpassen von Größen des Trainingsbildes und des Kontrollbildes in einem übereinstimmenden Zielbildpaar im Trainingssatz, um P verformte übereinstimmende Bildpaare verschiedener Maßstäbe zu erhalten;
Trainieren des Anfangsmodells auf Basis der P verformten übereinstimmenden Bildpaare, um P Verluste zu erhalten; und
Optimieren von Modellparametern des Anfangsmodells gemäß den P Verlusten, um das Bildverarbeitungsmodell zu erhalten.

9. Verfahren nach einem der Ansprüche 1 bis 8, wobei ein durch Trainieren auf Basis von jedem übereinstimmenden Bildpaar im Trainingssatz erhaltenes Modell einem ersten Bildverarbeitungsmodell dient und das Verfahren ferner Folgendes umfasst:
Vergrößern einer Größe eines Trainingsbildes im Trainingssatz von Moiré-Musterdaten, um ein vergrößertes Bild zu erhalten, das Moiré-Muster und eine Zielgröße aufweist;
Entfernen von Moiré-Mustern aus dem vergrößerten Bild, das Moiré-Muster aufweist, durch das erste Bildverarbeitungsmodell, um ein Kontrollbild mit einem Moiré-Muster zu erhalten;
Skalieren des Kontrollbildes mit dem Moiré-Muster und des vergrößerten Bildes, das Moiré-Muster aufweist, um eine Vielzahl von Bildpaaren mit Moiré-Muster zu erhalten; und
Optimieren von Modellparametern des ersten Bildverarbeitungsmodells auf Basis der Vielzahl von Bildpaaren mit Moiré-Muster, um das Bildverarbeitungsmodell zu erhalten.

10. Verfahren nach Anspruch 9, wobei:
ein Modell, das durch Optimieren der Modellparameter des ersten Bildverarbeitungsmodells auf Basis der Vielzahl von Bildpaaren mit Moiré-Muster erhalten wird, als eine erste Version des Bildverarbeitungsmodells dient;
die erste Version des Bildverarbeitungsmodells auf Basis des Trainingssatzes von Moiré-Musterdaten trainiert wird, um eine zweite Version des Bildverarbeitungsmodells zu erhalten;
das Bildverarbeitungsmodell Folgendes umfasst: die erste Version des Bildverarbeitungsmodells und die zweite Version des Bildverarbeitungsmodells; und
das Entfernen (602) der Moiré-Muster aus dem Originalbild durch das Bildverarbeitungsmodell, um das Zielbild zu erhalten, Folgendes umfasst:
Entfernen der Moiré-Muster aus dem Originalbild durch die erste Version des Bildverarbeitungsmodells und die zweite Version des Bildverarbeitungsmodells, um ein erstes Bild bzw. ein zweites Bild zu erhalten; und
Erhalten des Zielbildes auf Basis des ersten Bildes und des zweiten Bildes.

11. Intelligente Vorrichtung, die einen Speicher und einen Prozessor umfasst, wobei:
im Speicher Programmanweisungen für eine Bildverarbeitung gespeichert sind, und
der Prozessor dazu ausgelegt ist, die Programmanweisungen aufzurufen, um das Verfahren nach einem der Ansprüche 1 bis 10 zu implementieren.

12. Computerlesbares Speichermedium, auf dem ein Computerprogramm gespeichert ist, wobei:
das Computerprogramm, wenn es von einem Prozessor ausgeführt wird, das Verfahren nach einem der Ansprüche 1 bis 10 implementiert.

13. Computerprogrammprodukt, das Anweisungen umfasst, wobei:
die Anweisungen, wenn sie auf einem Computer ausgeführt werden, den Computer auslegen, das Verfahren zur Bildverarbeitung nach einem der Ansprüche 1 bis 10 durchzuführen.

## Revendications

1. Procédé de traitement d'images mis en œuvre par ordinateur, comprenant les étapes suivantes :
obtenir (601) une image originale ; et
supprimer (602) des motifs de moirage de l'image originale par le biais d'un modèle de traitement d'image afin d'obtenir une image cible ; dans lequel :
le modèle de traitement d'image est un modèle de réseau pré-entraîné selon un ensemble d'entraînement de données de motif de moirage ;
le modèle de traitement d'image comprend un module multibande configuré pour : traiter l'image originale afin d'obtenir une pyramide laplacienne à N couches liée à l'image originale, et afin d'obtenir une première carte de caractéristiques de résultat de traitement sur la base de cartes de caractéristiques correspondant à N bandes de fréquences spatiales de la pyramide laplacienne à N couches ;
l'image cible est obtenue sur la base de la première carte de caractéristiques de résultat de traitement, et
N est un nombre entier positif supérieur ou égal à 2 ;
dans lequel le procédé comprend en outre les étapes suivantes :
obtenir l'ensemble d'entraînement de données de motif de moirage, dans lequel l'ensemble d'entraînement de données de motif de moirage comprend des paires d'images appariées dont chacune comprend une image d'entraînement et une image de supervision, l'image d'entraînement ayant des motifs de moirage et l'image de supervision n'ayant pas motifs de moirage ; et
entraîner un modèle initial selon chaque paire d'images appariées dans l'ensemble d'entraînement afin d'obtenir le modèle de traitement d'image ; et
dans lequel l'obtention de l'ensemble d'entraînement de données de motif de moirage comprend ce qui suit :
décomposer chaque pixel dans une image initiale en trois sous-pixels qui sont alignés parallèlement, afin d'obtenir une image de sous-pixel, dans lequel les trois sous-pixels correspondent respectivement au rouge, au vert et au bleu dans l'image initiale ;
ajuster une taille de l'image de sous-pixel afin d'obtenir une première image intermédiaire ayant une taille identique à une taille des données d'image initiale ;
définir une échelle de gris de chaque pixel dont l'échelle de gris est inférieure à un premier seuil dans la première image intermédiaire pour qu'elle soit égale à un deuxième seuil, afin d'obtenir une deuxième image intermédiaire ;
réaliser une distorsion radiale sur la deuxième image intermédiaire afin d'obtenir une première image de distorsion ; et
réaliser une optimisation qui doit simuler une imagerie de caméra sur la première image de distorsion, afin d'obtenir l'image d'entraînement avec des motifs de moirage ajoutés ;
dans lequel la réalisation de l'optimisation qui doit simuler une imagerie de caméra sur la première image de distorsion comprend ce qui suit :
réaliser une transformation de perspective sur la première image de distorsion selon un premier paramètre de transformation de perspective afin d'obtenir une image à inclinaison simulée ;
traiter l'image à inclinaison simulée selon une caractéristique de distribution de luminosité de l'imagerie d'une caméra afin d'obtenir une image à luminosité simulée ;
ajouter un bruit d'image dans l'image à luminosité simulée afin d'obtenir une image à bruit simulé ; et
traiter l'image à bruit simulé selon un coefficient d'éclairage prédéfini afin d'obtenir une image à éclairage simulé.

2. Procédé selon la revendication 1, dans lequel la suppression de motifs de moirage de l'image originale par le biais du modèle de traitement d'image comprend ce qui suit :
activer le modèle de traitement d'image pour réaliser, par le biais du module multibande, M analyses initiales sur l'image originale afin d'obtenir des cartes de caractéristiques initiales sous N échelles, M étant un nombre entier positif supérieur ou égal à 2 et M étant supérieur ou égal à N, et l'analyse initiale comprend ce qui suit :
réaliser un sous-échantillonnage puis une convolution sur l'image originale, ou
réaliser une convolution avec réduction d'échelle sur l'image originale ;
réaliser une convolution sur les cartes de caractéristiques initiales sous les N échelles afin d'obtenir des cartes de caractéristiques intermédiaires sous les N échelles, respectivement ;
obtenir des cartes de caractéristiques correspondant à N bandes de fréquences spatiales d'une pyramide laplacienne à N couches selon les cartes de caractéristiques intermédiaires sous les N échelles ;
obtenir la première carte de caractéristiques de résultat de traitement selon les cartes de caractéristiques correspondant aux N bandes de fréquences spatiales ; et
obtenir l'image cible selon la première carte de caractéristiques de résultat de traitement.

3. Procédé selon la revendication 2, dans lequel dans les cartes de caractéristiques correspondent aux N bandes de fréquences spatiales,
une carte de caractéristiques de la N^{ème} bande de fréquence spatiale est obtenue selon une carte de caractéristiques intermédiaire ayant la N^{ème} plus petite échelle parmi les cartes de caractéristiques intermédiaires ; et
une carte de caractéristiques de la (N - i)^{ème} bande de fréquence spatiale est obtenue selon les cartes de caractéristiques intermédiaires qui vont de la (N - i)^{ème} carte de caractéristiques intermédiaire à la N^{ème} carte de caractéristiques intermédiaire, i étant un nombre entier positif supérieur ou égal à 1 et inférieur à N.

4. Procédé selon la revendication 2 ou 3, dans lequel l'obtention de la première carte de caractéristiques de résultat de traitement selon les cartes de caractéristiques correspondant aux N bandes de fréquences spatiales comprend ce qui suit :
obtenir une carte de caractéristiques prédite, dans lequel la carte de caractéristiques prédite est obtenue selon les N cartes de caractéristiques intermédiaires ;
redimensionner les cartes de caractéristiques dont les échelles sont plus petites qu'une échelle de la carte de caractéristiques prédite parmi les cartes de caractéristiques correspondant aux N bandes de fréquences spatiales à une échelle identique à l'échelle de la carte de caractéristiques prédite ; et
obtenir la première carte de caractéristiques de résultat de traitement selon la carte de caractéristiques prédite et les cartes de caractéristiques redimensionnées.

5. Procédé selon l'une des revendications 2 à 4, dans lequel le modèle de traitement d'image comprend en outre un module de prédiction, et l'obtention de l'image cible selon la première carte de caractéristiques de résultat de traitement comprend ce qui suit :
appliquer un flou à l'image originale afin d'obtenir une carte de caractéristiques avec flou ;
obtenir une deuxième carte de caractéristiques de résultat de traitement selon la première carte de caractéristiques de résultat de traitement et la carte de caractéristiques avec flou par le biais du module de prédiction ; et
obtenir l'image cible selon la deuxième carte de caractéristiques de résultat de traitement ;
dans lequel le modèle de traitement d'image comprend en outre un module de super-résolution, et l'obtention de l'image cible selon la deuxième carte de caractéristiques de résultat de traitement comprend ce qui suit :
obtenir une carte de caractéristiques de référence selon la première carte de caractéristiques de résultat de traitement, et obtenir une carte de caractéristiques de résultat intermédiaire par traitement de la deuxième carte de caractéristiques de résultat de traitement, dans lequel une échelle de la carte de caractéristiques de référence et une échelle de la carte de caractéristiques de résultat intermédiaire sont toutes deux identiques à une échelle de l'image originale ; et
obtenir l'image cible selon la carte de caractéristiques de référence et la carte de caractéristiques de résultat intermédiaire par le biais du module de super-résolution.

6. Procédé selon la revendication 1, dans lequel l'obtention de l'ensemble d'entraînement de données de motif de moirage comprend ce qui suit :
afficher une image initiale sur un écran d'affichage électronique, et photographier les données d'image initiale affichées afin d'obtenir l'image d'entraînement ;
réaliser un appariement des points caractéristiques et un alignement du flux optique sur les données d'image initiale par rapport à l'image d'entraînement, afin d'obtenir l'image de supervision ; et
construire la paire d'images appariées sur la base de l'image d'entraînement et de l'image de supervision correspondante.

7. Procédé selon l'une des revendications 1 à 6, dans lequel le modèle initial comprend un module multibande à entraîner, un module de prédiction à entraîner et un module de super-résolution à entraîner ; et
l'entraînement du modèle initial selon chaque paire d'images appariées dans l'ensemble d'entraînement comprend ce qui suit, pour chaque paire d'images appariées dans l'ensemble d'entraînement :
traiter l'image d'entraînement de ladite paire d'images appariées par le biais du modèle initial afin d'obtenir un premier résultat délivré par le module multibande, un deuxième résultat délivré par le module de prédiction et un troisième résultat délivré par le module de super-résolution, dans lequel le premier résultat comprend les cartes de caractéristiques des N bandes de fréquences spatiales correspondant à la pyramide laplacienne à N couches de l'image d'entraînement, le deuxième résultat comprend la deuxième carte de caractéristiques de résultat de traitement correspondant à l'image d'entraînement, et le troisième résultat comprend l'image cible correspondant à l'image d'entraînement ;
réaliser un traitement de pyramide laplacienne à N couches sur l'image de supervision de ladite paire d'images appariées afin d'obtenir les cartes de caractéristiques des N bandes de fréquences spatiales de l'image de supervision ;
obtenir N pertes de base entre les cartes de caractéristiques des N bandes de fréquences spatiales de l'image de supervision et le premier résultat ;
obtenir une première perte entre une image obtenue par traitement de résolution sur l'image de supervision et le deuxième résultat ;
obtenir une deuxième perte entre l'image de supervision et le troisième résultat ; et
optimiser des paramètres de modèle du modèle initial selon les N pertes de base, la première perte et la deuxième perte afin d'obtenir le modèle de traitement d'image.

8. Procédé selon l'une des revendications 1 à 7, dans lequel l'entraînement du modèle initial selon chaque paire d'images appariées dans l'ensemble d'entraînement comprend ce qui suit :
ajuster les tailles de l'image d'entraînement et de l'image de supervision dans une paire d'images appariées cible dans l'ensemble d'entraînement afin d'obtenir P paires d'images appariées déformées de différentes échelles ;
entraîner le modèle initial sur la base des P paires d'images appariées déformées afin d'obtenir P pertes ; et
optimiser des paramètres de modèle du modèle initial selon les P pertes afin d'obtenir le modèle de traitement d'image.

9. Procédé selon l'une des revendications 1 à 8, dans lequel un modèle obtenu par entraînement sur la base de chaque paire d'images appariées dans l'ensemble d'entraînement sert de premier modèle de traitement d'image, et le procédé comprend en outre les étapes suivantes :
agrandir une taille d'une image d'entraînement de l'ensemble d'entraînement de données de motif de moirage afin d'obtenir une image agrandie qui a des motifs de moirage et qui a une taille cible ;
supprimer les motifs de moirage de l'image agrandie ayant des motifs de moirage par le biais du premier modèle de traitement d'image afin d'obtenir une image de supervision de motif de moirage ;
mettre à l'échelle l'image de supervision de motif de moirage et l'image agrandie ayant des motifs de moirage afin d'obtenir une pluralité de paires d'images de motifs de moirage ; et
optimiser les paramètres de modèle du premier modèle de traitement d'image sur la base de la pluralité de paires d'images de motifs de moirage afin d'obtenir le modèle de traitement d'image.

10. Procédé selon la revendication 9, dans lequel :
un modèle obtenu en optimisant les paramètres de modèle du premier modèle de traitement d'image sur la base de la pluralité de paires d'images de motifs de moirage sert de première version du modèle de traitement d'image ;
la première version du modèle de traitement d'image est entraînée sur la base de l'ensemble d'entraînement de données de motif de moirage afin d'obtenir une deuxième version du modèle de traitement d'image ;
le modèle de traitement d'image comprend : la première version de modèle de traitement d'image et la deuxième version de modèle de traitement d'image ; et
la suppression (602) des motifs de moirage de l'image originale par le biais du modèle de traitement d'image afin d'obtenir l'image cible comprend ce qui suit :
supprimer les motifs de moirage de l'image originale par le biais de la première version du modèle de traitement d'image et de la deuxième version du modèle de traitement d'image afin d'obtenir une première image et une deuxième image, respectivement ; et
obtenir l'image cible sur la base de la première image et de la deuxième image.

11. Dispositif intelligent comprenant une mémoire et un processeur, dans lequel :
la mémoire stocke des instructions de programme pour le traitement d'images, et
le processeur est configuré pour invoquer les instructions de programme pour mettre en œuvre le procédé selon l'une des revendications 1 à 10.

12. Support de stockage lisible par ordinateur stockant un programme informatique, dans lequel :
le programme informatique, lorsqu'il est exécuté par un processeur, met en œuvre le procédé selon l'une des revendications 1 à 10.

13. Produit de programme informatique, comprenant des instructions, dans lequel :
les instructions, lorsqu'elles sont exécutées sur un ordinateur, configurent l'ordinateur pour qu'il réalise le procédé de traitement d'images selon l'une des revendications 1 à 10.
